# EUROPEAN PATENT SPECIFICATION

(11) **EP 4 149 299 B1**
(45) Date of publication and mention of the grant of the patent: **23.10.2024**
(21) Application number: 21725737.7
(22) Date of filing: 12.05.2021
(51) Int. Cl.: A24F 40/485

(54) **AEROSOL-GENERATING ARTICLE COMPRISING A LIQUID RESERVOIR AND A TRANSFERRABLE SEALING MEMBER**
AEROSOLERZEUGENDER ARTIKEL MIT EINEM FLÜSSIGKEITSRESERVOIR UND EINEM BEWEGBAREN DICHTUNGSELEMENT
ARTICLE DE GÉNÉRATION D'AÉROSOL COMPRENANT UN RÉSERVOIR DE LIQUIDE ET D'UN ÉLÉMENT D'ÉTANCHÉITÉ TRANSFÉRABLE

(30) Priority: 15.05.2020 EP 20175053
(43) Date of publication of application: 22.03.2023
(73) Proprietor: Philip Morris Products S.A., 2000 Neuchâtel (CH)
(72) Inventor: COURBAT, Jerome, Christian, 2000 Neuchâtel (CH); MIRONOV, Oleg, 2000 Neuchâtel (CH); ÖZSUN, Özgür, 2000 Neuchâtel (CH)
(74) Representative: HGF
(86) International application number: PCT/EP2021/062571
(87) International publication number: WO 2021/228913

(56) References cited:
- WO-A1-2019/115112
- WO-A1-2019/224531
- US-A- 3 721 240
- US-A1- 2011 290 248
- US-A1- 2016 095 355
- US-A1- 2018 154 092
- WIKIPEDIA CONTRIBUTORS: "Solenoid - Wikipedia", 27 April 2020 (2020-04-27), XP055839448, Retrieved from the Internet <URL:https://en.wikipedia.org/w/index.php?title=Solenoid&oldid=953429211> [retrieved on 20210909]

## Description

The present disclosure relates to an aerosol-generating article for use with an aerosol-generating device, wherein the article comprises a liquid reservoir for storing an aerosol-forming liquid. The present disclosure also relates to an aerosol-generating system comprising such an article.

Generating inhalable aerosols by heating aerosol-forming liquids is generally known from prior art. For this, a liquid aerosol-forming substrate may be conveyed by a liquid conduit, for example a wick element, from a liquid reservoir into a region outside the reservoir. There, the liquid may be vaporized by a heater and subsequently exposed to an air path such as to form an inhalable aerosol. Both, the liquid reservoir and the liquid conduit may be part of an aerosol-generating article that is configured to be inserted into an aerosol-generating device in order to vaporize the aerosol-forming liquid stored in the article. In order to ensure that the quality of the aerosol-forming liquid remains acceptable under expected conditions of distribution and storage until consumption, the reservoir may be sealed, for example, by a perforable septum. However, once opened, the seal could not be reclosed properly. This may reduce the shell life of the aerosol-generating article, in particular the useful life after opening.

US 2016/095355 A1 discloses an e-cigarette comprising a reservoir for storing e-liquid. The reservoir has an outlet, flow from which is controlled by a ball valve. The ball valve is opened by an electromagnetic actuator against the action of a spring which biases the ball valve onto the outlet.

WO 2019/115112 A1 discloses an e-cigarette comprising a reservoir for storing e-liquid and a valve attached to the outlet of the reservoir for regulating or closing off the fluid supply from the reservoir to a vaporizing unit. The reservoir may be in the form of a disposable capsule. The valve comprises a biasing member to bias a sealing member of the valve into a closed position against a body. In the opening direction, the sealing member of the valve can be transferred by an actuator which comprises a shape memory wire made of a shape-memory alloy. The shape-memory alloy may be thermally activated by arranging it in proximity to the vaporizing heater of the e-cigarette.

WO 2019/224531 A1 discloses an atomizer component of a vapor provision system comprising a liquid reservoir having a reservoir wall with at least one movable section that is configured to reduce the storage volume as the substrate is withdrawn. The reservoir includes a flexible outlet tube that can be deformed by a dispenser element adjacent the outlet tube to increase the liquid pressure within the tube so as to open a one-way outlet valve and dispense liquid. That is, deformation of the outlet tube and thus opening of the reservoir does not occur due to a mechanical interaction of the outlet tube with some kind of aerosol-generating device in the course of an insertion movement. The opening process of the outlet valve caused by the deformation of the outlet tube is mediated by the aerosol-forming liquid and thus only works when aerosol-forming liquid is present in the tube.

It would be desirable to have an aerosol-generating article for storing an aerosol-forming liquid with the advantages of prior art solutions, whilst mitigating their limitations. In particular, it would be desirable to have an aerosol-generating article for storing an aerosol-forming liquid which has an improved shell life, in particular an improved useful life after opening.

According to an aspect of the present invention, there is provided an aerosol-generating article for use with an aerosol-generating device. The article comprises a liquid reservoir for storing an aerosol-forming liquid. The liquid reservoir comprises a reservoir outlet. The article further comprises a sealing member which is reversibly transferrable between an open configuration and a closed configuration such as to open or sealingly close the reservoir outlet, respectively. In addition, the article comprises an actuator member which is operatively coupled to the sealing member for transferring the sealing member at least from the closed configuration into the open configuration. The actuator member has different configurations according to independent claims 1, 2, 5, 6 and 7.

According to the invention it has been found the shell life of the aerosol-generating article may be significantly improved by a sealing member that is transferrable such as to reversibly open and close the reservoir outlet. In particular, the reservoir outlet may be reliably reclosed once being opened. Due to this, the shell life before consumption as well as the useful life after beginning of consumption may be increased. Accordingly, an article, which has been consumed only partially, may be easily left in or removed from the aerosol-generating device and stored for later consumption without the remaining aerosol-forming liquid leaking from the reservoir, altering or being contaminated until later consumption.

As used herein, the term "transferring the sealing member" may include one of displacing the sealing member or deforming the sealing member between a closed configuration, in which the sealing member sealingly closes the reservoir outlet, and an open configuration, in which the sealing member clears the reservoir outlet. Likewise, the term "sealing member that is transferrable" may include one of a sealing member that is displaceable or a sealing member that is deformable between a closed configuration, in which the sealing member sealingly closes the reservoir outlet, and an open configuration, in which the sealing member clears the reservoir outlet. A mechanical displacement may be a change of the position of the center-of-mass. A deformation may be a change in shape, in particular between a flat shape in the open configuration or in the closed configuration and a bend shape, in particular a curved shape, for example, a convexly or concavely curved shape, in the closed configuration or in the open configuration, respectively.

Having an actuator member operatively coupled to the sealing member for transferring the sealing member at least from a closed configuration into an open configuration advantageously enables to easily prepare the article for consumption, in particular when the article is inserted into an aerosol-generating device configured for use with the article. Accordingly, the actuator member may be configured for transferring the sealing member at least from the closed configuration into the open configuration in response to inserting the article into the aerosol-generating device.

Preferably, the actuator member is also configured for transferring the sealing member from the open configuration into the closed configuration. Advantageously, this facilitates closing off the reservoir once being opened, for example, when consumption of the article temporarily is stopped or when the article temporarily is removed from the aerosol-generating device. In particular, the actuator member may be configured for transferring the sealing member from the open configuration into the closed configuration in response to removing the article from the aerosol-generating device.

According to one aspect of the invention, the actuator member may be a thermally driven actuator member. A thermally driven actuator may be any actuator member which under the influence of a temperature change undergoes at least one of a mechanical displacement or a deformation that is suitable for transferring the sealing member at least from the closed configuration into the open configuration. A temperature change may be either an extraction of thermal energy from or a supply of thermal energy to the thermally driven actuator member.

The thermal energy that is required to be converted into a mechanical displacement or deformation for transferring the sealing member may origin from a heating process used for heating the aerosol-forming liquid when the article is received in the aerosol-generating device. For that purpose, the thermally driven actuator may be arranged in thermal contact or thermal proximity of a heating element used for heating the aerosol-forming liquid when the article is received in the aerosol-generating device. That is, when heated, for example, during a pre-heating of the aerosol-forming liquid, the thermally driven actuator may bend in one direction or may expand such as to transfer the sealing member from a closed configuration into an open configuration. Vice versa, when cooling down again towards its initial temperature, the thermally driven actuator may bend back or may contract such as to transfer the sealing member from the open configuration into the closed configuration.

It is also possible that the aerosol-generating device, which the aerosol-generating article is configured to be used with, comprises a heating arrangement for actuating the thermally driven actuator member. The heating arrangement for actuating the thermally driven actuator member may be separate from a heating arrangement of the aerosol-generating device used for evaporating the aerosol-forming liquid. Advantageously, a separate heating arrangement enables to selectively open and close the reservoir outlet, in particular independently from the vaporization process. Heating of the actuator member may be started in response to at least one of a user input or a start of the heating operation for heating the aerosol-forming liquid or the insertion of the article into the aerosol-generating device. Likewise, the aerosol-generating device may comprise a common heating arrangement used for actuating the thermally driven actuator member as well as for evaporating the aerosol-forming liquid. Advantageously, a common heating arrangement enables to open and close the reservoir outlet synchronously with starting and stopping the vaporization process. For example, the heating arrangement, in particular the separate heating arrangement may comprise a resistive heating element which is arranged such as to be in thermal contact or thermal proximity to the thermally driven actuator member, when the article is received in the aerosol-generating device. Likewise, in particular in case the thermally driven actuator member is inductively heatable, the heating arrangement may comprise an induction source including at least one induction coil for generating an alternating magnetic field at the place of the thermally driven actuator member, when the article is received in the aerosol-generating device in order to heat the thermally driven actuator member by inductive heating. As used in this context, the term "inductively heatable actuator member" refers to a thermally driven actuator member comprising a susceptor material that is capable to convert electromagnetic energy into heat when subjected to an alternating magnetic field. This may be the result of at least one of hysteresis losses or eddy currents induced in the susceptor material, depending on its electrical and magnetic properties. The at least one induction coil may be a helical coil or flat planar coil, in particular a pancake coil or a curved planar coil. Use of a flat spiral coil allows a compact design that is robust and inexpensive to manufacture. The induction source may be a common induction source configured to inductively heat the thermally driven actuator member and the aerosol-forming liquid simultaneously using the same altering magnetic field. Likewise, the induction source used for actuating the thermally driven actuator member may be separate from a heating arrangement of the aerosol-generating device used for evaporating the aerosol-forming liquid.

As an example, the thermally driven actuator member may comprise a bi-metal. A bi-metal refers to an object which is composed of two or more separate metals joined together and which converts a temperature change into at least one mechanical displacement or a deformation. As used herein the term "bi-metal" does not only refer to objects composed of two separate metals, but also to object composed of three, four or more separate metals, that is, to tri-metals, to tetra-metals, or generally to any multi-metals. For example, the bi-metal may comprise different types of stainless steel, such as an austenitic and ferritic stainless steel. The bi-metal may also comprise a combination of different types of other metals, such stainless steel and tungsten. The thermally driven actuator member may, for example, a bimetallic strip operatively coupled to the sealing member for transferring the sealing member at least from a closed configuration in the open position. The strip may comprise two strips of different metals which expand at different rates as they are heated, that is, which have a different coefficient of thermal expansion. The different expansions force the strip to bend one way if heated, and back in the opposite direction if cooled. The metal with the higher coefficient of thermal expansion is on the outer side of the curve when the strip is heated and on the inner side when cooled. The bending of the strip leads to a displacement which in turn may cause a transfer of the sealing member coupled to the strip. That is, when heated, for example, during a pre-heating of the aerosol-forming liquid, the strip may bend in one direction such as to transfer the sealing member from a closed configuration into an open configuration. Vice versa, when cooling again down towards its initial temperature, the strip may bend back such as to transfer the sealing member from the open configuration into the closed configuration.

It is also possible that the thermally driven actuator member may comprise a multi-layer member which is composed of two or more separate layer of different materials, in particular including metals and non-metals, joined together and which converts a temperature change into at least one mechanical displacement or a deformation. For example, the multi-layer member may comprise a metal layer and a plastic layer, or a metal layer and a ceramic layer. The plastic layer may comprise or may be made of, for example, parylene or silicone. Advantageously, the plastic layer may form the sealing member.

As another example, the thermally driven actuator member may comprise a shape-memory material. A shape-memory material is a material, in particular an alloy, which can be deformed when cold but returns to its pre-deformed ("remembered") shape when heated. The shape memory effect occurs because a temperature-induced phase transformation reverses deformation. The phase transformation typically occurs at a predefined temperature, the so-called switching temperature. The shape-memory material may be either a one-way shape-memory material or a two-way shape-memory material. A one-way shape-memory material is a shape-memory material which, when it is in its cold state, can be bent or stretched and will hold those shapes until heated above the transition temperature. Upon heating, the shape changes to its original. When the material cools again, it will retain the shape, until deformed again. A two-way shape-memory material is a shape-memory material which remembers two different shapes: one at low temperatures, and one at the high-temperature shape. A material that shows a shape-memory effect during both heating and cooling is said to have two-way shape memory. This can also be obtained without the application of an external force (intrinsic two-way effect). Like in case of a bi-metal, the phase transformation of the shape-memory material is accompanied by at least one of a displacement or a deformation which may be used to a transfer the sealing member between the closed configuration and the open configuration.

In general, the shape-memory material may be designed to have a predefined switching temperature at which the phase transformation occurs. Preferably, the switching temperature is chosen to be significantly above room temperature (20 degree Celsius) or higher temperatures, for example, higher than 50 degree Celsius. Higher temperatures, such as temperatures up to 50 degree Celsius, may occur for example, if the aerosol-generating article is left in car under insolation. Advantageously, this ensures that the shape-memory material is in a first one of two phases for temperatures at which the article is typically transported or stored, that is, below the operation temperature at which the aerosol-forming liquid stored in the article is evaporated. Accordingly, this first phase preferably is used to transfer and maintain the sealing member in the closed configuration such as to ensure a proper sealing of the reservoir outlet for temperatures at which the article is typically transported or stored. Vice versa, the switching temperature should be chosen to be below the operation temperature of the shape-memory material during evaporation of the aerosol-forming liquid in use of the article. This ensures that the shape-memory material already is in the second one of the two phases well before reaching its operation temperature in use of the article. Accordingly, the second phase preferably is used to transfer and maintain the sealing member in the open configuration such as to ensure that the reservoir outlet is freed to enable evaporation of aerosol-forming liquid in a region outside the reservoir. However, the switching temperature should be chosen to be only slightly above the operation temperature of the shape-memory material in use of the article. This may reduce the closure time for transferring the sealing member into the closed configuration after consumption of the article, in particular after evaporation of the aerosol-forming liquid has stopped. Advantageously, a short closure time reduces the risk of undesired leakage and contamination of aerosol-forming liquid that is still contained in the reservoir. Accordingly, the switching temperature may be 5 degree Celsius, or 10 degree Celsius or 20 degree Celsius below the he operation temperature of the shape-memory material in use of the article. In any case, the switching temperature should be chosen to be well below the boiling temperature of the aerosol-forming liquid stored in the article in order to avoid undesired boiling of the aerosol-forming liquid in the reservoir. In absolute numbers, the switching temperature of the shape memory material may be in a range between 80 degree Celsius and 240 degree Celsius, between 80 degree Celsius and 120 degree Celsius.

The shape-memory material may be an austenitic titanium alloy, in particular an austenitic nickel-titanium alloy or a nickel-titanium-hafnium alloy. Nickel-titanium alloys change from austenite to martensite upon cooling. Advantageously, the transition from the martensite phase to the austenite phase is only dependent on temperature and stress, but not on time.

For example, the thermally driven actuator member may comprise at least one temperature actuated spring including or being made of a shape-memory material. The spring may be configured to expand when heated, and to contract when it cools again. Vice versa, the spring may also be configured to contract when heated, and to expand when it cools again. The temperature actuated spring may be coupled to the sealing member such as to exert a force to the sealing member at least in the closing direction, for example, as the temperature actuated spring expands either when it is heated or when it cools down. In addition, the temperature actuated spring may be coupled to the sealing member, in particular attached to the sealing member, such as to exert a force to the sealing member in the opening direction as well.

The at least one temperature actuated spring may comprise at least one of a cylindrical coil spring (helical spring) or a conical coil spring (conical-helical spring) or a disc spring or a star spring. A disc spring may have a conical or curved shell which can be loaded along its axis either statically or dynamically. The temperature actuated spring may comprise a stack of single disc springs or a star springs to modify the spring constant or the amount of deflection. Stacking in the same direction will add the spring constant in parallel, creating a stiffer joint with the same deflection. Stacking in an alternating direction results in a lower spring constant and greater deflection. Mixing and matching directions allow a specific spring constant and deflection capacity to be designed.

According to another aspect of the invention, the actuator member may be a magnetically driven actuator member. In general, a magnetically driven actuator member may be part of a magnetic actuator which uses magnetic effects to generate forces which impact on the motion of the magnetically driven actuator member. The magnetic actuator preferably is based on magnetic forces acting at distance, that is, Laplace-Lorentz forces and reluctance forces. Magnetic actuators can be sorted in different categories two of which are particularity suitable for transferring the sealing member of aerosol-generating article at least from the closed configuration into the open configuration: moving magnet actuators and moving iron actuators.

Moving magnet actuators may comprise a mobile permanent magnet and stationary magnetic coil which are arranged such that currents in the magnetic coil generate a pair of equal and opposite forces between the magnet and the magnetic coil which cause the magnet to be displaced. Likewise, the magnet actuator may comprise a mobile permanent magnet and a stationary permanent magnet or a stationary magnetic material which cause the mobile permanent magnet to be displaced when being brought in proximity to the stationary permanent magnet or the stationary magnetic material. Accordingly, the magnetically driven actuator member - as part of a moving magnet actuator - may comprise a permanent magnet that is movable at least from a first position into a second position by interaction with a magnetic coil, a permanent magnet or a magnetic material of the aerosol-generating device, thereby transferring the sealing member at least from the closed configuration into the open configuration.

In a moving iron actuator, a mobile ferromagnetic or ferrimagnetic member, in particular a soft magnetic member is placed in the field of magnetic coil or a permanent magnet. Driven by the effort to minimize the magnetic energy of the entire system, the mobile ferromagnetic or ferrimagnetic member is displaced due to the reluctance force. Accordingly, the magnetically driven actuator member - as part of a moving iron actuator - may comprise a ferromagnetic or ferrimagnetic member, in particular a soft magnetic member, which is movable at least from a first position into a second position by interaction with a magnetic coil or a permanent magnet of the aerosol-generating device, thereby transferring the sealing member at least from the closed configuration into the open configuration.

According to another aspect of the invention, the actuator member may be a mechanical-contact driven actuator member which is configured and arranged to mechanically interact with the aerosol-generating device when being inserted into the aerosol-generating device such that the actuator member is transferred from a first configuration into a second configuration, thereby transferring the sealing member from the closed configuration into the open configuration. The transfer of the mechanical-contact driven actuator from the first configuration into the second configuration may be caused by a displacement of the aerosol-generating article relative to the aerosol-generating device when the article is inserted into the device. That is, the transfer of the mechanical-contact driven actuator from the first configuration into the second configuration may be induced by the movement of article during insertion into the device. As an example, the mechanical-contact driven actuator member may a movable piston which is configured and arranged to mechanically interact, in particular to abut or to engage with an abutment, in particular a pusher or a catch of the aerosol-generate device when the article is inserted into the aerosol-generating device. Due to the interaction with the catch or abutment, the piston is transferred from a first configuration into a second configuration at least when the article has reached its pre-defined position in the device.

As another example, the mechanical-contact driven actuator member may be a flexible wall member of the aerosol-generating article. For instance, the flexible wall member may be an end portion of the article, in particular a bottom portion of the article. The flexible wall member may be made of an elastic material, such as silicone. The flexible wall member may be configured to interact with a pusher of the aerosol-generate device, such as a piston, when the article is inserted into the device such that the flexible wall member is deformed towards the interior of the article. For example, the pusher may be a piston-like protrusion at the bottom of a cavity of the device, in which the article may be inserted for use with the device. Hence, when the article is inserted into the device, the flexible actuator member may get in contact with the protrusion which deforms the flexible wall member towards the interior of the article. Accordingly, the flexible wall member is transferred from a first configuration (non-deformed configuration) into a second configuration (deformed configuration) at least when the article has reached its pre-defined position in the device. This transfer may be used to transfer the sealing member at least from the closed configuration into the open configuration. For example, the sealing member may be a flexible tube made of elastic membrane material. The flexible tube may comprise a plurality of slits through the tube wall extending along the tube axis. The slitted tube-like sealing member may be arranged in the article such that it is compressed and bulges outwardly by the flexible wall member being deformed towards the interior of the article. Due to the bulging, the slits through the tube wall of the sealing member may open up, thereby allowing aerosol-forming liquid to enter the interior of the tube-like sealing member and thus to get into fluid communication with the reservoir outlet. When the article is removed from the cavity, the flexible actuator member may return back into its flat (non-deformed) configuration due to its elastic nature. Likewise, the tube-like sealing member may return back into its extended (non-bulged) configuration, due to its elastic nature and possibly due to the flexible actuator member straightening it when the actuator member returns back into its flat configuration. In the extended (non-bulged) configuration of the sealing member, the slits through the tube wall of the sealing member are sealingly closed such the tube-like sealing member sealingly close the reservoir outlet.

Likewise, the aerosol-generating device may comprise a mechanical actuator configured and arranged to mechanically interact with the mechanical-contact driven actuator member for transferring the actuator member from a first configuration into a second configuration. The mechanical actuator of the device may be a movable pusher or a moveable catch. Movement of the movable pusher or the moveable catch may be caused manually be a user actuating the movable pusher or the moveable catch. Likewise, movement of the movable pusher or the moveable catch may be caused by an electrically or a magnetically driven actuator.

In order to facilitate the transfer of the sealing member from the open configuration into the closed configuration, the aerosol-generating article may further comprise a return mechanism arranged and configured to transfer the sealing member from the open configuration into the closed configuration. In particular, the return mechanism may comprise at least one return spring. Alternatively or in addition, the return mechanism may be realized at least partially by the sealing member comprising or being made of a resilient material. Like return spring, the resilience of the sealing member may be configured such as to act in the closing direction in order to transfer the sealing member from the open configuration into the closed configuration. Preferably, the return mechanism is configured such as to exert a sealing force onto the sealing member acting in the closing in direction, when the sealing member (already) is in the closed configuration. Advantageously, the sealing force enhances the sealing closure of the reservoir outlet.

In general, the actuator member and the sealing member may be in physical contact with each other at least during the transfer of the sealing member from the closed configuration into the open configuration. If the actuator member is configured to transfer the sealing member from the open configuration into the closed configuration, the actuator member and the sealing member may also be in physical contact with each other during the transfer of the sealing member from the open configuration into the closed configuration.

Likewise, the return mechanism and the sealing member may be in physical contact with each other at least during the transfer of the sealing member from the open configuration into the closed configuration. In addition, the return mechanism and the sealing member may be in physical contact with each other during the transfer of the sealing member from the closed configuration into the open configuration.

As used in this context, physical contact may be at least one of: abutting against each other, engaging each other, or being attached to each other. In particular, the actuator member and the sealing member may be attached to each other by at least one of a form fit, a force fit or an adhesive bond. With regard to the actuator member and the sealing member, the form fit may act either only in the opening direction, or in the opening direction and in the closing direction. For example, the actuator member and the sealing member may be glued to each other, pressed together or screwed to each other. Likewise, the actuator member and the sealing member may be overmolded by plastic. With regard to the return mechanism and the sealing member, the form fit may act either only in the closing direction, or in the opening direction and in the closing direction. For example, the return mechanism and the sealing member may be glued to each other, pressed together or screwed to each other.

The actuator member and the sealing member may be integrally formed with each other. For example, the aerosol-generating article may comprise a sealing body made of a magnetic material and configured to sealing close the reservoir outlet. Due to the magnetic material, the sealing body may be actuated by a magnetic coil or a permanent magnet of an aerosol-generating device when the article is inserted therein. Thus, the sealing body is both, an actuator member and a sealing member.

In general, the sealing member may have any shape, configuration and arrangement suitable to sealingly close the reservoir outlet.

Preferably, the sealing member comprises or is made of an elastic material, in particular a rubber material. Advantageously, elastic materials have an inherent sealing property as they may adapt themselves to the structure of the seal seat and in addition provide a tight seal due to their resilient nature.

In general, the sealing member may be arranged either inside the reservoir or outside the reservoir. That is, the sealing member may be arranged and configured to sealingly close the reservoir outlet from outside the reservoir or from inside the reservoir.

The sealing member may be or may comprise one of a cap or plate which covers the reservoir outlet in the closed configuration. Likewise, the sealing member may be or may comprise a plug which is fittingly arranged at least partially in the reservoir outlet in the closed configuration such as to block the reservoir outlet. For example, the sealing member may a plug having a half-ball or conical shape to close a circular opening of the reservoir outlet.

As described above, the sealing member may also comprise a flexible tube made of elastic membrane material. The flexible tube may comprise a plurality of slits through the tube wall extending along the tube axis, that is, along a length axis of the flexible tube. The slitted tube-like sealing member may be arranged in the article such that it is compressed and bulges outwardly. Due to the bulging, the slits through the tube wall of the sealing member may open up, thereby allowing aerosol-forming liquid to enter the interior of the tube-like sealing member and thus to get into fluid communication with the reservoir outlet. In the extended (non-bulged) configuration of the sealing member, the slits through the tube wall of the sealing member are sealingly closed such the tube-like sealing member sealingly close the reservoir outlet.

The aerosol-generating article may further comprise a liquid conduit for delivering aerosol-forming liquid from the liquid reservoir through the reservoir outlet into a region outside the liquid reservoir, when the sealing member is in the open configuration.

The liquid conduit may be arranged stationary within the aerosol-generating article. It is also possible the liquid conduit is moveably arranged within the aerosol-generating article. The liquid conduit may transferrable between a first position and a second position. For example, the liquid conduit may be attached to at least one of the sealing member or the actuator member. Due to this, the liquid conduit may be transferrable between a first position and a second position together with the sealing member or the actuator member, respectively, such as to a provide a switchable liquid flow from the liquid reservoir to the region outside the liquid reservoir. The first position corresponds to the sealing member being in the closed configuration, whereas the second position corresponds to the sealing member being in the open configuration.

When the sealing member is in the closed configuration, the liquid conduit may be arranged at least partially outside the reservoir. In particular, the liquid conduit may be arranged completely outside the reservoir, when the sealing member is in the closed configuration. Due to this, the liquid conduit is not in contact with the aerosol-forming liquid in the reservoir, when the sealing member is in the closed configuration. Advantageously, this prevents aerosol-forming liquid in the reservoir from being contaminated and from unintentionally escaping from the reservoir.

Hence, in general, the liquid conduit preferably is sealed from aerosol-forming liquid inside the reservoir, when the sealing member is in the closed configuration.

Vice versa, the liquid conduit preferably may be arranged completely inside the reservoir, when the sealing member is in the closed configuration. This may also prevent aerosol-forming liquid in the reservoir from being contaminated and from unintentionally escaping from the reservoir via the liquid conduit, when the sealing member is in the closed configuration.

When the sealing member is in the open configuration, the liquid conduit may be arranged at least partially in the reservoir. That is, at least a part of the liquid conduit may pass into the reservoir. Likewise, the liquid conduit may face the reservoir, when the sealing member is in the open configuration. As used herein, the term "face the reservoir" refers to a configuration in which the liquid conduit is in fluid communication with, but does not pass into the reservoir. For example, the liquid conduit may terminate in the reservoir outlet. Both arrangements enable the liquid conduit to be soaked by aerosol-forming liquid contained in the reservoir. Accordingly, that part of the liquid conduit which is arranged in the reservoir or faces the reservoir at least when the sealing member is in the open configuration may be denoted as soaking section of the liquid conduit.

The liquid conduit may be arranged at least partially in a region outside the reservoir, when the sealing member is in the open configuration. That is, at least a part of the liquid conduit may pass into a region outside the reservoir. Likewise, the liquid conduit may face a region outside the reservoir, when the sealing member is in the open configuration. As used herein, the term "face a region outside the reservoir" refers to a configuration in which the liquid conduit is in fluid communication with, but does not pass into the region outside the reservoir. For example, the liquid conduit may terminate in the reservoir outlet. Both arrangements enable to provide aerosol-forming liquid in a region outside the reservoir for vaporization. Accordingly, the region outside the reservoir may be a vaporization zone, where aerosol-forming liquid may be vaporized by heating in order to form an aerosol. Preferably, the vaporization zone is part of the aerosol-generating article. That is, the aerosol-generating article may comprise a vaporization zone, in particular a vaporization cavity. Accordingly, when the sealing member is in the open configuration, the liquid conduit may pass into or may be arranged in the vaporization zone. Likewise, the liquid conduit may face the vaporization zone, when the sealing member is in the open configuration.

The liquid conduit may pass through the reservoir outlet, when the sealing member is in the open configuration. This particularly holds in case the liquid conduit passes into the reservoir as well as into a region outside the reservoir.

It is also possible that the liquid conduit passes through the reservoir outlet, when the sealing member is in the closed configuration. Although the liquid conduit passes through the reservoir outlet in the closed configuration, the sealing member may still sealingly close the reservoir outlet. For example, the sealing member may be a cap, such as a cup-like cap, which imposes on that part of the liquid conduit, that passes through the reservoir outlet, and which covers both, the liquid conduit and the reservoir outlet such as to sealingly close off the reservoir from the region outside the reservoir. As another example, the sealing member may be deformable and configured to have a cap-like or a cup-like shape at least in the closing configuration.

The liquid conduit may also pass through at least one of the sealing member and the actuator member.

Furthermore, it is possible that at least a portion of the liquid conduit is squeezed, when the sealing member is in the closed configuration. Advantageously, squeezing of the liquid conduit may cause the liquid conveyance through the liquid conduit to be decreased or even interrupted. As a consequence, aerosol-forming liquid is prevented from escaping from the reservoir through the liquid conduit. Squeezing the liquid conduit is particularly beneficial in case the liquid conduit passes through the sealing member, even in the closed configuration of the sealing member.

In general, the liquid conduit may have any shape and configuration suitable to convey aerosol-forming liquid from the reservoir to a region outside the reservoir, in particular to a vaporization zone of the article.

The liquid conduit may comprise a wick element. The configuration of the wick element may be a stranded wire, a stranded rope of material, a mesh, a mesh tube, several concentric mesh tubes, a cloth, sheets of material, or a foam (or other porous solid) with sufficient porosity, a roll of fine metal mesh or some other arrangement of metal foil, fibers or mesh, or any other geometry that is appropriately sized and configured to carry out the wicking action as described herein.

The liquid conduit, in particular the wick element, may comprise a filament bundle including a plurality of filaments. Preferably, the filament bundle is an unstranded filament bundle. In an unstranded filament bundle, the filaments run next to each other without crossing each other, preferably along the entire length extension of the filament bundle. Likewise, the filament bundle may comprise a stranded portion, in which the filaments of the filament bundle are stranded. A stranded portion may enhance the mechanical stability of the filament bundle.

As an example, the filament bundle may comprise a parallel-bundle portion along at least a portion of its length extension in which the plurality of filaments may be arranged parallel to each other. The parallel-bundle portion may be arranged at one end portion of the filament bundle or between both end portions of the filament bundle. Alternatively, the parallel-bundle portion may extend along the entire length dimension of the filament bundle.

As another example, the filament bundle may comprise a first soaking section, a second soaking section and an intermediate section between the first soaking section and the second soaking section. Along at least the intermediate section the plurality of filaments may be arranged parallel to each other. With regard to the specific configuration of the article having a buffer reservoir and a vaporization zone, each of the first soaking section and the second soaking section may be arranged at least partially in the capillary buffer reservoir, while the intermediate section may be arranged in a region outside the capillary buffer reservoir, in particular in the vaporization zone.

Using filaments for conveying liquids is particularly advantageous because filaments inherently provide a capillary action. Moreover, in a filament bundle, the capillary action is further enhanced due to the narrow spaces formed between the pluralities of filaments when being bundled. In particular, this applies for a parallel arrangement of the filaments along which the capillary action is constant as the narrow spaces between the filaments do not vary along the parallel arrangement.

Preferably, the filaments are solid material filaments. Solid material filaments are inexpensive and easy to manufacture. In addition, solid material filaments provide a good mechanical stability, thus making the filament bundle robust. In general, the filaments may have any cross-sectional shape suitable for conveying aerosol-forming liquid, in particular when being bundled. Accordingly, the filaments may have a circular, an ellipsoidal, an oval, a triangular, a rectangular, a quadratic, a hexagonal or a polygonal cross-section. Preferably, the filaments have a substantially circular, oval or elliptically cross-section. Having such a cross-section, the filaments are not in area contact, but only in a line contact with each other causing the formation of capillary spaces between the pluralities of filaments on its own.

The capillary action generally relies on a reduction in the surface energy of the two separate surfaces, the liquid surface and the solid surface of the filaments. The capillary action includes an effect that depends on the radius of curvature of both the liquid surface and the filaments. Hence, there may be a need for large surface areas and small radii of curvature, both of which are achieved by a small diameter of the filaments. Accordingly, the plurality of first filaments may have a diameter of at most 0.025 millimeter, at most 0.05 millimeter, at most 0.1 millimeter, at most 0.15 millimeter, at most 0.2 millimeter, at most 0.25 millimeter, at most 0.3 millimeter, at most 0.35 millimeter, at most 0.4 millimeter, at most 0.45 millimeter or at most 0.5 millimeter.

In general, the filament bundle may be a linear filament bundle, that is, a substantially straight, non-curved or non-bent filament bundle. This configuration does not exclude little bending of the filament bundle, that is, large curvature radii along the length extension of the filament bundle. As used herein, large curvature radii may include curvature radii being 10 times, in particular 20 times or 50 times or particular 100 times larger than the total length of the filament bundle. Alternatively, the filament bundle may be curved. In particular, the filament bundle may be substantially U-shaped or C-shaped or V-shaped.

The plurality of filaments may be surface treated. In particular, the plurality of filaments may comprise at least partially a surface coating, for example, an aerosolization enhancing surface coating, a liquid-adhesive surface coating, a liquid repellent surface coating, or an antibacterial surface coating. The aerosolization enhancing surface coating advantageously may in particular enhance the variety of a user's experience. The liquid adhesive surface coating may be beneficial with regard to an enhancement of the capillary action of the filament bundle. The antibacterial surface coating may serve to reduce a bacterial contamination. A liquid repellent coating, in particular at an extremity of the filaments, may avoid liquid dropping.

Depending on the available space, the dimensions of the filaments and the amount of aerosol-forming liquid to be conveyed and heated, the filament bundle may comprise 3 to 100 filaments, in particular 10 to 80 filaments, preferably 20 to 60 filaments, more preferably 30 to 50 filaments, for example 40 filaments.

As yet another example, the liquid conduit may comprise two filament arrays crossing each other partially. In particular, the liquid conduit may comprise an array of longitudinal filaments arranged side by side as well as an array of transverse filaments arranged side by side and crossing the array of longitudinal filaments transverse to a length extension of the longitudinal filaments. The array of transverse filaments may only extend along a length portion of the array of longitudinal filaments such that the liquid conduit comprises at least one grid portion and at least one non-grid portion. As an example, the array of longitudinal filaments may have a substantially cylindrical shape, in particular hollow-cylindrical shape. As another example, the array of longitudinal filaments may have a substantially conical shape or a substantially frustoconical shape, in particular a substantially hollow-conical shape or a substantially hollow-frustoconical shape. In any of these configurations, the longitudinal filaments form the shell surface of the cylindrical, conical, frustoconical, hollow-cylindrical, hollow-conical or hollow-frustoconical shape, respectively. The length axis of the respective shape extends substantially along the length extension of the longitudinal filaments. Advantageously, any of the aforementioned shapes provides an inherent mechanical dimensional stability. The array of transverse filaments preferably has a substantially ring shape in any of these configurations. That is, the transverse filaments extend along the circumference of the cylindrically, conically, frustoconically, hollow-cylindrical, hollow-conically or hollow-frustoconically shaped array of longitudinal filaments in the grid portion of the susceptor assembly. Seen as a whole, the susceptor assembly has a substantially crown shape in any of the afore-mentioned configurations. Furthermore, in case of conical, frustoconical, hollow-conical or hollow-frustoconical shape, the longitudinal filaments diverge from each other towards the base of the respective shape. Therefore, a conically, frustoconically, hollow-conically or hollow-frustoconically shaped array of longitudinal filaments facilitates providing a fan-out portion.

Preferably, the liquid conduit may be inductively heatable. As such, the liquid conduit advantageously is capable to perform both functions: conveying and heating an aerosol-forming liquid. Advantageously, this double function allows for a very material saving and compact design of the liquid conduit without separate means for conveying and heating. In addition, there is a direct thermal contact between the heat source, that is, the liquid conduit and the aerosol-forming liquid adhering thereto. Unlike in case of a heater in contact with a saturated wick, a direct contact between the liquid conduit and a small amount of liquid advantageously allows for flash heating, that is, for a fast onset of evaporation. To this extent, the liquid conduit may be considered to be or to comprise a liquid-conveying susceptor assembly. As used herein, the term "inductively heatable" refers to a liquid conduit comprising a susceptor material that is capable to convert electromagnetic energy into heat when subjected to an alternating magnetic field. This may be the result of at least one of hysteresis losses or eddy currents induced in the susceptor material, depending on its electrical and magnetic properties. Hysteresis losses occur in ferromagnetic or ferrimagnetic susceptor materials due to magnetic domains within the material being switched under the influence of an alternating electromagnetic field. Eddy currents are induced in electrically conductive susceptor materials. In case of an electrically conductive ferromagnetic or ferrimagnetic susceptor material, heat is generated due to both, eddy currents and hysteresis losses.

Accordingly, the inductively heatable liquid conduit may comprise at least a first susceptor material. The first susceptor material may comprise or may be made of a material that is at least one of electrically conductive and ferromagnetic or ferrimagnetic, respectively. That is, the first susceptor material may comprise or may be made of one of a ferrimagnetic material, or a ferromagnetic material, or an electrically conductive material, or electrically conductive ferrimagnetic material or electrically conductive ferromagnetic material.

In addition, the liquid conduit may comprise a second susceptor material. While the first susceptor material may be optimized with regard to heat loss and thus heating efficiency, the second susceptor material may be used as temperature marker. For this, the second susceptor material preferably comprises one of a ferrimagnetic material or a ferromagnetic material. In particular, the second susceptor material may be chosen such as to have a Curie temperature corresponding to a predefined heating temperature. At its Curie temperature, the magnetic properties of the second susceptor material change from ferromagnetic or ferrimagnetic to paramagnetic, accompanied by a temporary change of its electrical resistance. Thus, by monitoring a corresponding change of the electrical current absorbed by the induction source it can be detected when the second susceptor material has reached its Curie temperature and, thus, when the predefined heating temperature has been reached. The second susceptor material preferably has a Curie temperature that is lower than 500 degree Celsius. In particular, the second susceptor material may have a Curie temperature below 350 degree Celsius, preferably below 300 degree Celsius, more preferably below 250 degree Celsius, even more preferably below 200 degree Celsius, most preferably below 150 degree Celsius. Preferably, the Curie temperature is chosen such as to be below the boiling point of the aerosol-forming liquid to be vaporized in order to prevent the generation of hazardous components in the aerosol.

As an example, the liquid conduit may comprise a plurality of first filaments comprising or being made of the first susceptor material. In addition, the liquid conduit may comprise a plurality of second filaments comprising or being made of the second susceptor material. Preferably, the first susceptor material is different from the second susceptor material. To sufficiently work as temperature marker, only a few second filaments are required. Accordingly, the number of first filaments may be larger, in particular two times or three times or four times or five times or six times or seven times or eight times or nine times or ten times larger than the number of second filaments. Preferably, the diameter of the first and second filaments should be larger than twice the skin depth in order to induce a sufficient amount of eddy currents and thus to generate a sufficient amount of heat energy when being exposed to an alternating magnetic field. The skin depth is a measure of how far electrical conduction takes place in an electrically conductive susceptor material when being inductively heated. Accordingly, depending on the materials and the frequency of the alternating magnetic field used, the first and second filaments may have a diameter of at least 0.015 millimeter, at least 0.02 millimeter, at least 0.025 millimeter at least 0.05 millimeter, at least 0.075 millimeter, at least 0.1 millimeter, at least 0.125 millimeter, at least 0.15 millimeter, at least 0.2 millimeter, at least 0.3 millimeter or at least 0.4 millimeter. The second filaments may be randomly distributed throughout the liquid conduit. Advantageously, a random distribution requires only little effort during manufacturing of the liquid conduit.

The plurality of first filaments and the optional plurality of second filaments described before may be used in any of the configurations of the liquid conduit described above, for example, in a filament bundle comprising at least one parallel-bundle portion, in a filament bundle comprising two soaking sections and an intermediate portion or in liquid conduit comprising two filament arrays crossing each other partially such as to form at least one grid portion and at least one non-grid portion.

In case the liquid conduit is inductively heatable, it may be arranged off-center with regard to a geometrical center axis of the aerosol-generating article, as already described further above. Due to this, the liquid conduit may be arrangeable off-center with regard to a symmetry axis of an alternating magnetic field generated by an inductively heating aerosol-generating device into which the aerosol-generating article may be inserted for heating the liquid conduit. Advantageously, due to the off-center arrangement, that is, an asymmetric arrangement, the liquid conduit is arranged in a region of the alternating magnetic field having a higher field density as compared to a symmetric center arrangement. As a consequence, the heating efficiency is enhanced.

The aerosol-generating article may be an aerosol-generating article for single use or an aerosol-generating article for multiple uses. In the latter case, the aerosol-generating article may be refillable. That is, the reservoir may be refillable with an aerosol-forming liquid. In any configuration, the aerosol-generating article may further comprise an aerosol-forming liquid contained in the reservoir.

As used herein, the term "aerosol-forming liquid" relates to a liquid capable of releasing volatile compounds that can form an aerosol upon heating the aerosol-forming liquid. The aerosol-forming liquid is intended to be heated. The aerosol-forming liquid may contain both, solid and liquid aerosol-forming material or components. The aerosol-forming liquid may comprise a tobacco-containing material containing volatile tobacco flavor compounds, which are released from the liquid upon heating. Alternatively or additionally, the aerosol-forming liquid may comprise a non-tobacco material. The aerosol-forming liquid may further comprise an aerosol former. Examples of suitable aerosol formers are glycerin and propylene glycol. The aerosol-forming liquid may also comprise other additives and ingredients, such as nicotine or flavourants. In particular, the aerosol-forming liquid may include water, solvents, ethanol, plant extracts and natural or artificial flavors. The aerosol-forming liquid may be a water-based aerosol-forming liquid or an oil-based aerosol-forming liquid.

The reservoir may comprise or may be made of one of PEEK (polyether ether ketone), PP (polypropylene), PE (polyethylene) or PET (polyethylene terephthalate). PP, PE and PET are particularly cost-effective and easy to mold, in particular to extrude.

The reservoir may be partitioned at least into a main reservoir for storing aerosol-forming liquid and a capillary buffer reservoir a capillary buffer reservoir in fluid communication with the main reservoir for storing aerosol-forming liquid due to capillary action. The reservoir outlet may be in fluid communication with the capillary buffer reservoir for providing aerosol-forming liquid at an interface to the outside of the capillary buffer reservoir and the main reservoir. The buffer reservoir is configured storing aerosol-forming liquid due to capillary action in order to reliably provide a liquid conduit in fluid communication with the buffer reservoir with a sufficient amount of aerosol-forming liquid, independent of the article position. For this, the volume of the capillary buffer reservoir may be chosen small enough so that capillary effects dominate over gravity. As a consequence, once having been filled into the buffer reservoir, aerosol-forming liquid is prevented from flowing back into the main reservoir, in particular when the orientation of the article is changed, for example, from a substantially upright position into a substantially horizontal position or even into an upside down position. Basically the capillary buffer reservoir acts like a buffer reservoir of a fountain pen.

The dimensions of the capillary buffer reservoir may be chosen such that a maximum dimension between two opposing walls defining at least a portion of the capillary buffer reservoir is in a range between 0.2 millimeter and 5 millimeter, in particular between 0.5 millimeter and 2.5 millimeter, preferably between 1 millimeter and 2 millimeter. These values ensure sufficient capillary action, whilst still enabling to provide a sufficiently large buffer volume for storing a sufficient amount of aerosol-forming liquid.

The capillary buffer reservoir may have a total volume up to 60 cubic millimeters, in particular up to 50 cubic millimeters, preferably up to 40 cubic millimeters, more preferably up to 30 cubic millimeters, most preferably up to 20 cubic millimeters. These volumes still ensure proper capillary action

Vice versa, the total volume of the capillary buffer reservoir may be at least 5 cubic millimeters, in particular at least 10 cubic millimeters, preferably at least 15 cubic millimeters. These volumes are still large enough to trap and provide a sufficient amount of aerosol-forming liquid in the capillary buffer reservoir lasting at least for a few puffs.

According to the invention, there is also provided an aerosol-generating system comprising an aerosol-generating device and an aerosol-generating article according to the present invention and as described herein. The article is configured for use with the aerosol-generating device.

According to the invention, there is also provided an aerosol-generating system comprising an aerosol-generating device and an aerosol-generating article according to the present invention and as described herein. The article is configured for use with the aerosol-generating device.

As used herein, the term "aerosol-generating device" is used to describe an electrically operated device that is capable of interacting with at least one aerosol-generating article including at least one aerosol-forming liquid such as to generate an aerosol by heating the aerosol-forming liquid within the article. Preferably, the aerosol-generating device is a puffing device for generating an aerosol that is directly inhalable by a user through the user's mouth. In particular, the aerosol-generating device is a hand-held aerosol-generating device.

The device may comprise a receiving cavity for removably receiving at least a portion of the aerosol-generating article.

In addition, the aerosol-generating device may comprise an electrical heating arrangement. The heating arrangement may be configured for heating aerosol-forming liquid contained in the article. In particular, the heating arrangement may be configured for heating aerosol-forming liquid conveyed from the reservoir to a region outside the reservoir, in particular to a vaporization zone as described above. The liquid may be conveyed by a liquid conduit as described above.

The heating arrangement may be a resistive heating arrangement comprising a resistive heating element for heating the aerosol-forming liquid. The resistive heating element may be, for example, a heating wire or a heating coil. In use, the resistive heating element is arranged in thermal contact or thermal proximity to the aerosol-forming liquid to be heated. In particular, the resistive heating element may be arranged in thermal contact or thermal proximity to a liquid conduit, in particular to a part of the liquid conduit which is arranged in a vaporization zone of the aerosol-generating article, when the aerosol-generating article is received in the aerosol-generating device.

Alternatively, the heating arrangement may be an inductive heating arrangement. That is, the aerosol-generating device may be an inductively heating aerosol-generating device. This configuration is particularly preferred in case the liquid conduit of the article is inductively heatable. Inductive heating may also work in case the aerosol-generating article comprises a (separate) susceptor element which is arranged in thermal contact or thermal proximity to the liquid conduit, in particular to a part of the liquid conduit which is arranged in a vaporization zone of the aerosol-generating article. It is also possible that the aerosol-generating device itself comprises a susceptor element which is arranged in thermal contact or thermal proximity to the liquid conduit, in particular to a part of the liquid conduit which is arranged in a vaporization zone of the aerosol-generating article, when the aerosol-generating article is received in the aerosol-generating device. In the latter configuration, that is, in case the liquid conduit itself is not inductively heatable, the susceptor element may be, for example, a susceptor sleeve or a susceptor coil surrounding the liquid conduit, in particular a part of the liquid conduit which is arranged in a vaporization zone of the aerosol-generating article.

The inductively heating aerosol-generating device, in particular the inductive heating arrangement may comprise at least one induction source configured and arranged to generate an alternating magnetic field in the receiving cavity in order to inductively heat the aerosol-forming liquid in the aerosol-generating article, when the article is received in the aerosol-generating device.

For generating the alternating magnetic field, the induction source may comprise at least one inductor, preferably at least one induction coil arranged around the receiving cavity. In case the liquid conduit is inductively heatable, the induction coil is arranged around the liquid conduit when the article is received in the receiving cavity, in particular around a part of the liquid conduit which is arranged in a vaporization zone of the aerosol-generating article.

The at least one induction coil may be a helical coil or flat planar coil, in particular a pancake coil or a curved planar coil. Use of a flat spiral coil allows a compact design that is robust and inexpensive to manufacture. Use of a helical induction coil advantageously allows for generating a homogeneous alternating magnetic field. As used herein a "flat spiral coil" means a coil that is generally planar, wherein the axis of winding of the coil is normal to the surface in which the coil lies. The flat spiral induction coil can have any desired shape within the plane of the coil. For example, the flat spiral coil may have a circular shape or may have a generally oblong or rectangular shape. However, the term "flat spiral coil" as used herein covers both, coils that are planar as well as flat spiral coils that are shaped to conform to a curved surface. For example, the induction coil may be a "curved" planar coil arranged at the circumference of a preferably cylindrical coil support, for example ferrite core. Furthermore, the flat spiral coil may comprise for example two layers of a four-turn flat spiral coil or a single layer of four-turn flat spiral coil. The at least one induction coil may be held within one of a main body or a housing of the aerosol-generating device.

The aerosol-generating article may be configured such that the inductively heatable liquid conduit - if present - is arranged off-center with regard to a symmetry axis of the alternating magnetic field generated by the induction source when the article is received in the receiving cavity of the aerosol-generating device. As described above, due to the off-center arrangement, that is, an asymmetric arrangement, the liquid conduit is arranged in a region of the alternating magnetic field having a higher field density as compared to a symmetric center arrangement. As a consequence, the heating efficiency is enhanced.

The induction source may comprise an alternating current (AC) generator. The AC generator may be powered by a power supply of the aerosol-generating device. The AC generator is operatively coupled to the at least one induction coil. In particular, the at least one induction coil may be integral part of the AC generator. The AC generator is configured to generate a high frequency oscillating current to be passed through the at least one induction coil for generating an alternating magnetic field. The AC current may be supplied to the at least one induction coil continuously following activation of the system or may be supplied intermittently, such as on a puff by puff basis.

Preferably, the induction source comprises a DC/AC converter connected to the DC power supply including an LC network, wherein the LC network comprises a series connection of a capacitor and the inductor.

The induction source preferably is configured to generate a high-frequency magnetic field. As referred to herein, the high-frequency magnetic field may be in the range between 500 kHz (kilo-Hertz) to 30 MHz (Mega-Hertz), in particular between 5 MHz (Mega-Hertz) to 15 MHz (Mega-Hertz), preferably between 5 MHz (Mega-Hertz) and 10 MHz (Mega-Hertz).

The aerosol-generating device may further comprise a controller configured to control operation of the heating process, preferably in a closed-loop configuration, in particular for controlling heating of the aerosol-forming liquid to a pre-determined operating temperature. The operating temperature used for heating the aerosol-forming liquid may be in a range between 100 degree Celsius and 300 degree Celsius, in particular between 150 degree Celsius and 250 degree Celsius, for example 230 degree Celsius. These temperatures are typical operating temperatures for heating but not combusting the aerosol-forming substrate.

The controller may be or may be art of an overall controller of the aerosol-generating device. The controller may comprise a microprocessor, for example a programmable microprocessor, a microcontroller, or an application specific integrated chip (ASIC) or other electronic circuitry capable of providing control. The controller may comprise further electronic components, such as at least one DC/AC inverter and/or power amplifiers, for example a Class-C power amplifier or a Class-D power amplifier or Class-E power amplifier. In particular, the induction source may be part of the controller.

The aerosol-generating device may comprise a power supply, in particular a DC power supply configured to provide a DC supply voltage and a DC supply current to the induction source. Preferably, the power supply is a battery such as a lithium iron phosphate battery. As an alternative, the power supply may be another form of charge storage device such as a capacitor. The power supply may require recharging, that is, the power supply may be rechargeable. The power supply may have a capacity that allows for the storage of enough energy for one or more user experiences. For example, the power supply may have sufficient capacity to allow for the continuous generation of aerosol for a period of around six minutes or for a period that is a multiple of six minutes. In another example, the power supply may have sufficient capacity to allow for a predetermined number of puffs or discrete activations of the induction source.

In case of an inductively heating aerosol-generating device, the aerosol-generating device may further comprise a flux concentrator arranged around at least a portion of the induction coil and configured to distort the alternating magnetic field of the at least one inductive source towards receiving cavity. Thus, when the article is received in the receiving cavity, the alternating magnetic field is distorted towards the inductively heatable liquid conduit, if present. Preferably, the flux concentrator comprises a flux concentrator foil, in particular a multi-layer flux concentrator foil.

For transferring the sealing member of the article at least from the closed configuration into the open configuration, the aerosol-generating device may comprise a magnetic coil, a permanent magnet or a magnetic material. The magnetic coil, the permanent magnet or the magnetic material may form the stationary part of a moving magnet actuator. As mobile counter part of the moving magnet actuator, the aerosol-generating article may comprise a magnetically driven actuator member comprising a permanent magnet. As described further above with regard to the aerosol-generating article according to the present invention, the permanent magnet may be movable at least from a first position into a second position by interaction with the magnetic coil, the permanent magnet or the magnetic material of the device, thereby transferring the sealing member from the closed configuration into the open configuration.

Likewise, as also described above, the aerosol-generating device may comprise a magnetic coil or a permanent magnet, and the aerosol-generating article may comprise a magnetically driven actuator member comprising a ferromagnetic or ferrimagnetic member which is movable at least from a first position into a second position by interaction with the magnetic coil or the permanent magnet of the device, thereby transferring the sealing member from the closed configuration into the open configuration.

In any of the aforementioned configurations, usage of a magnetic coil advantageously enables to control the opening and closing of the reservoir outlet. The aerosol-generating device may be configured such as to activate the magnetic coil in response to at least one of a user input or a start of the heating operation for heating the aerosol-forming liquid or the insertion of the article into the aerosol-generating device. Likewise, the aerosol-generating device may be configured such as to de-activate the magnetic coil in response to at least one of a user input or a stop of the heating operation for heating the aerosol-forming liquid or the removal of the article from the aerosol-generating device.

According to another aspect, the aerosol-generating article may comprise a mechanical-contact driven actuator member. The mechanical-contact driven actuator member may be configured and arranged to mechanically interact with the aerosol-generating device in order to transfer the sealing member of the article at least from the closed configuration into the open configuration. For this, the aerosol-generating device may comprise a pusher or a catch, in particular a stationary pusher or a stationary catch, such as a piston, for example a protrusion. The pusher or the catch may be arranged and configured to transfer the actuator member of the aerosol-generating article from a first configuration into a second configuration when the article is inserted into the aerosol-generating device, thereby transferring the sealing member from the closed configuration into the open configuration. In addition, the pusher or catch may be arranged and configured to transfer the actuator member of the aerosol-generating article from the second configuration into the first configuration when the article is removed from the aerosol-generating device, thereby transferring the sealing member from the open configuration into the closed configuration. Likewise, the aerosol-generating device may comprise a mechanical actuator configured and arranged to mechanically interact with the mechanical-contact driven actuator member for transferring the actuator member from a first configuration into a second configuration. The mechanical actuator of the device may be a movable pusher or a moveable catch. Movement of the movable pusher or the moveable catch may be caused manually be a user actuating the movable pusher or the moveable catch. Likewise, movement of the movable pusher or the moveable catch may be caused by an electrically or a magnetically driven actuator.

According to yet another aspect, the aerosol-generating article may comprise a thermally driven actuator member as described above, and the aerosol-generating device may comprise a heating arrangement for heating the thermally driven actuator member, when the article is inserted into the aerosol-generating device, in order to transfer the sealing member from the closed configuration into the open configuration. The heating arrangement may comprise a resistive heater. Alternatively, the thermally driven actuator member may comprise a susceptor material, and the heating arrangement may comprise an induction source for generating an alternating magnetic field at the place of the thermally driven actuator member, when the article is received in the aerosol-generating device, in order to heat the thermally driven actuator member by inductive heating.

The heating arrangement for heating the thermally driven actuator member may be configured such as to be activated in response to at least one of a user input or a start of the heating operation for heating the aerosol-forming liquid or the insertion of the article into the aerosol-generating device. Likewise, the heating arrangement for heating the thermally driven actuator member may be configured such as to be de-activated in response to at least one of a user input or a stop of the heating operation for heating the aerosol-forming liquid or the removal of the article from the aerosol-generating device.

Further features and advantages of the aerosol-generating system according to the present invention have already been described with regard to the aerosol-generating article according to the present invention and thus equally apply.

Examples will now be further described with reference to the figures in which:
- Fig. 1: schematically illustrates a first embodiment of an aerosol-generating article according to the present invention in an open configuration;
- Fig. 2: shows a cross-section through the aerosol-generating article according to Fig. 1 along line A-A;
- Fig. 3: shows the aerosol-generating article according to Fig. 1 - 2 in a closed configuration;
- Fig. 4: schematically illustrates an exemplary embodiment of an aerosol-generating system according to the present invention, comprising the article according to Fig. 1 - 3 and an aerosol-generating device for use with the article;
- Fig. 5: schematically illustrates an alternative of the aerosol-generating article according to Fig. 1 - 3 in an open configuration;
- Fig. 6: schematically illustrates a second embodiment of an aerosol-generating article according to the present invention in a closed configuration;
- Fig. 7: schematically illustrates the aerosol-generating article according to Fig. 6 in an open configuration;
- Fig. 8: schematically illustrates another exemplary embodiment of an aerosol-generating system, comprising an aerosol-generating article according to a third embodiment and an aerosol-generating device for use with the article;
- Fig. 9: shows the aerosol-generating article according to Fig. 8 in a closed configuration, without the aerosol-generating device;
- Fig. 10: schematically illustrates yet another exemplary embodiment of an aerosol-generating system, comprising an aerosol-generating article according to a fourth embodiment and an aerosol-generating device for use with the article; and
- Fig. 11: shows the aerosol-generating article according to Fig. 10 in a closed configuration, without the aerosol-generating device.

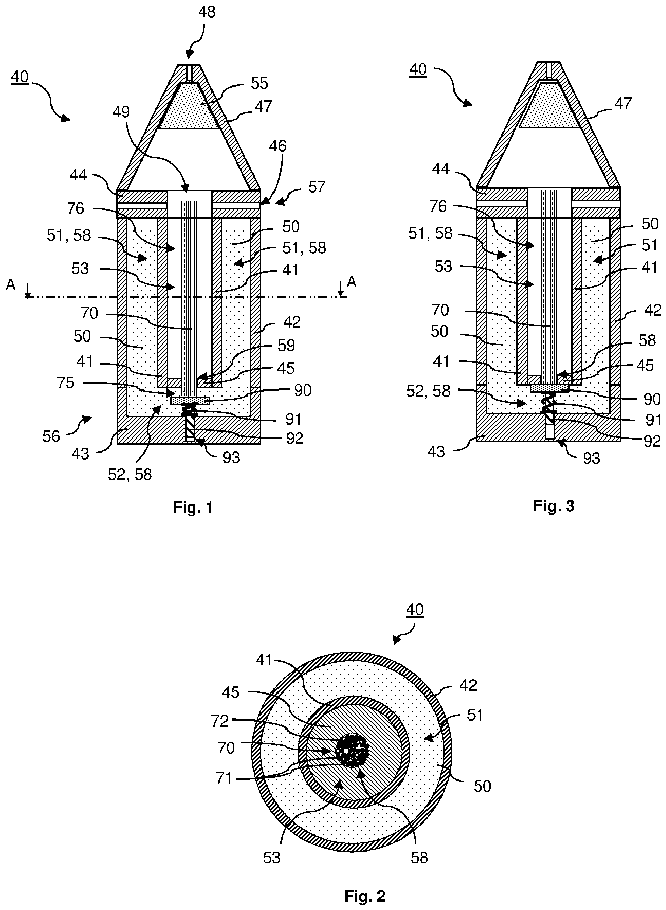

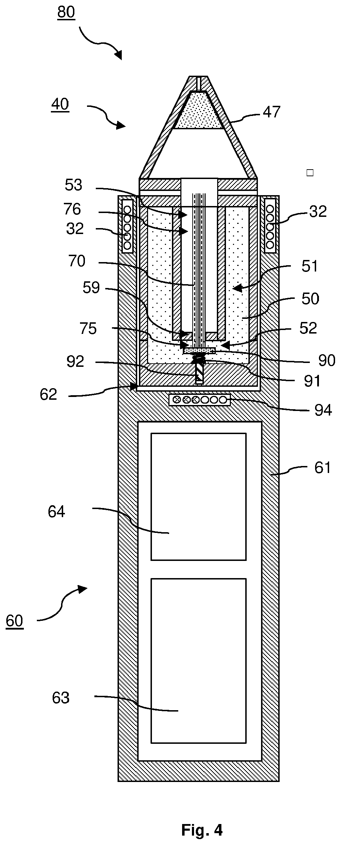

**Fig. 1** schematically illustrates an aerosol-generating article 40 according to a first embodiment of the present invention. As will be described in more detail further below with regard to Fig. 4, the aerosol-generating article 40 is configured for use with an inductively heating aerosol-generating device in order to vaporize an aerosol-forming liquid 50 provided by the aerosol-generating article 40. The article 40 comprises a substantially cylindrical article housing made of a liquid impermeable rigid material, for example, one of PET (polyethylene terephthalate), PP (polypropylene) or PE (polyethylene). The article housing comprises a hollow-cylindrical outer tubular wall 42, a first end cap 44 and a second end cap 43. The first end cap 44 sealingly closes the inner void of the tubular wall 42 at a first end 57 of the tubular wall 42, whereas the second end cap 43 sealingly closes the inner void of the tubular wall 42 at the opposite second end 56. The article 40 further comprises a cylindrical partition wall 41 as part of article housing which is arranged coaxially in the cylindrical tubular outer wall 42 such as to partition the inner void of the cylindrical tubular outer wall 42 into a hollow-cylindrical first compartment 58 and a cylindrical second compartment coaxially surrounded by the first compartment 58. At the bottom of the second compartment, the article 40 comprises a substantially disc-shaped bushing 45 which separates the inner void of the second compartment from a recess that is formed in the second end cap 43. The first compartment 58 forms a hollow-cylindrical main reservoir 51 for storing aerosol-forming liquid 50, while that part of the recess, which is falls in line with the second compartment, serves a capillary buffer reservoir 52. As can be seen in Fig. 1, the recess is formed such that the main reservoir 51 directly opens out into the capillary buffer reservoir 52 allowing aerosol-forming liquid 50 to freely flow from the main reservoir 51 into the capillary buffer reservoir 52. That is, the main reservoir 51 and the capillary buffer reservoir 52 are in fluid communication with each other. Together, the main reservoir and the capillary buffer reservoir 52 form the reservoir 58 of the aerosol-generating article 40 according to the invention and as defined herein. In contrast, the second compartment is not part of the reservoir 58, but in in a region outside the reservoir 58. In the present embodiment, the second compartment forms a cylindrical vaporization zone 53, in particular a vaporization cavity for vaporizing aerosol-forming liquid stored in the reservoir 58. In order to provide a fluid communication between the reservoir 58 and the vaporization zone 53, the bushing comprises an aperture which forms a reservoir outlet 59 of the reservoir 58. As described further above, the buffer reservoir 52 is configured storing aerosol-forming liquid due to capillary action in order to provide a certain amount of aerosol-forming liquid close to the reservoir outlet 59 independent of the article position. For this, the volume of the capillary buffer reservoir is chosen small enough so that capillary effects dominate over gravity. In particular, it is sufficient that only one dimension of the buffer reservoir is smaller than the effective capillary length. As a consequence, once aerosol-forming liquid 50 filled in the buffer reservoir 52, it is prevented from flowing back into the main reservoir 51, in particular when the orientation of the article 40 is changed, for example, from a substantially upright position as shown in Fig. 1 into a substantially horizontal position or even into an upside down position. Basically the capillary buffer 51 reservoir acts like a buffer reservoir of a fountain pen.

For conveying aerosol-forming liquid 50 from the capillary buffer reservoir 52 into the vaporization zone 53, the article 40 comprises a liquid conduit 70, details of which are also shown in **Fig. 2****.** In the present embodiment, the liquid conduit 70 is an unstranded filament bundle having a substantially circular cross-section which is particularly easy to manufacture. The filament bundle comprises a plurality of filaments 71, 72 arranged parallel to each other. Due to the arrangement of the filaments 71, 72 in the filament bundle and due to the small diameter of the filaments 71, 72, the liquid conduit 70 comprises capillary channels formed between the filaments 71, 72. These channels provide capillary action along the length extension of the liquid conduit 70, thus allowing for conveying aerosol-forming liquid 50 from the capillary buffer reservoir 52 into the vaporization cavity 53.

In addition to the liquid conveying property, the liquid conduit 70 of the present embodiment is also configured for inductive heating. For that purpose, the liquid conduit 70 comprises at least a plurality of first filaments 71 including a first susceptor material that is optimized with regard to heat generation. The liquid conduit 70 may also comprises a plurality of second filaments 72 including a second susceptor material which serves as temperature marker, as described further above. Due to the susceptive nature of the filament materials, the liquid conduit 70 is capable to be inductively heated in an alternating magnetic field and thus to vaporize aerosol-forming liquid in thermal contact with the filaments 71, 72. The liquid conduit 70 thus is capable to perform two functions: conveying and heating aerosol-forming liquid. For this reason, the liquid conduit may also be denoted as a liquid-conveying susceptor assembly.

As can be seen in Fig. 1, the liquid conduit 70 passes through the reservoir outlet 59 of the reservoir 58 in the bushing 45 such that a first portion of the liquid conduit 70 is arranged in the buffer reservoir 52 and a second portion is arranged in the vaporization cavity 53. As in Fig. 1, the first portion of the liquid conduit 70 is arranged in the buffer reservoir 52 and thus immersed in aerosol-forming liquid 50, it acts as a soaking section 75 for conveying aerosol-forming liquid 50 from the buffer reservoir 52 to the second portion of the liquid conduit 70. In the vaporization cavity 53, the second portion acts at least partially as a heating section 76 for vaporizing aerosol-forming liquid 50 when being exposed to an alternating magnetic field in order to inductively heat the filaments 71, 72. This will be described in more detail below with regard to Fig. 4.

In order to prevent aerosol-forming liquid from leaking from the reservoir 58 until first consumption of the article 40 or when the article 40 is temporarily unused during consumption, the article 40 comprises a sealing member 90 that is transferrable between an open configuration and a closed configuration such as to open or sealingly close the reservoir outlet 59. While Fig. 1 shows the aerosol-generating article in the open configuration of the sealing member 90, Fig. 3 shows the aerosol-generating article 40 in the closed configuration of the sealing member 90. Thus, the reversibly closing and opening sealing increases the shelf life of the article as well as the useful life after beginning of consumption.

In the present embodiment, the sealing member 90 is a plate made of rubber which in the closed configuration abuts against the bushing 45, thereby sealingly covering the reservoir outlet 59. For transferring the sealing member from the closed configuration into the open configuration, and preferably also back, the aerosol-generating article 40 further comprises an actuator member 91 which is operatively coupled to the sealing member 90. In the present embodiment, the actuator member 91 is a helical spring made of a shape-memory material, in particular a two-way shape-memory material. Due to this, the spring remembers two different shapes: one at low temperatures, and one at higher temperatures at or above a predefined switching temperature. In the present embodiment, the spring is configured such that the spring is in an expanded state at low temperatures, as shown in Fig. 3. In contrast, the spring is in a contracted state at or above the predefined switching temperature, as shown in Fig. 1. In the present embodiment, the helical spring is arranged between the inner surface of the second end cap 43 and that side of the sealing member 90 which faces the second end cap 43. Even more, the helical spring is attached to both, the second end cap 43 and the sealing member 90. Accordingly, in the expanded state, the helical spring presses the sealing member 90 against the bushing 45 such as to sealingly close the reservoir outlet 59 from inside the reservoir. Vice versa, in the contract state, the helical spring lifts off the sealing member 90 form the bushing 45 such as to free the reservoir outlet 59. Advantageously, due to the two-way shape-memory material, the helical spring allows to actively transfer the sealing ember 90 in both directions, that is, from the closed configuration into the open configuration as well from the open configuration into the closed configuration.

In order to provide guidance for the movement of the sealing member 90, the aerosol-generating article 40 further comprises a piston 92 that is attached to the sealing member 90 and slidingly supported in a guide hole 93 in the second end cap 43.

As described further above, the shape-memory material should be chosen such that it has a switching temperature well above the temperatures at which the article is typically transported or stored, but well below the boiling temperature of the aerosol-forming liquid 50 stored in the article 40. For example, the switching temperature may be in a range between 80 degree Celsius and 180 degree Celsius, in particular 80 degree Celsius and 120 degree Celsius. For example, the shape-memory material may be an austenitic titanium alloy, in particular an austenitic nickel-titanium alloy or a nickel-titanium-hafnium alloy.

As will be described in more detail with regard to Fig. 4, the thermal energy that is required for driving the phase transformation of the shape-memory material and thus for transferring the sealing member from the closed configuration into the open configuration origins from a heating arrangement in the aerosol-generating device the article 40 is configured to be used with.

As can be further seen in Fig .1 and Fig. 3, the liquid conduit 70 is slidingly arranged in the article 40 and attached to the sealing member 90, to that side which faces the reservoir outlet 59. Hence, the liquid conduit 70 may follow the movement of the sealing member 90. Accordingly, in the open configuration, the liquid conduit 70 is arranged partially in the reservoir 58. Vice versa, in the open configuration, the liquid conduit 70 is not arranged in the reservoir 58, but only in the vaporization zone 53 and partially in the passage of the reservoir outlet 59.

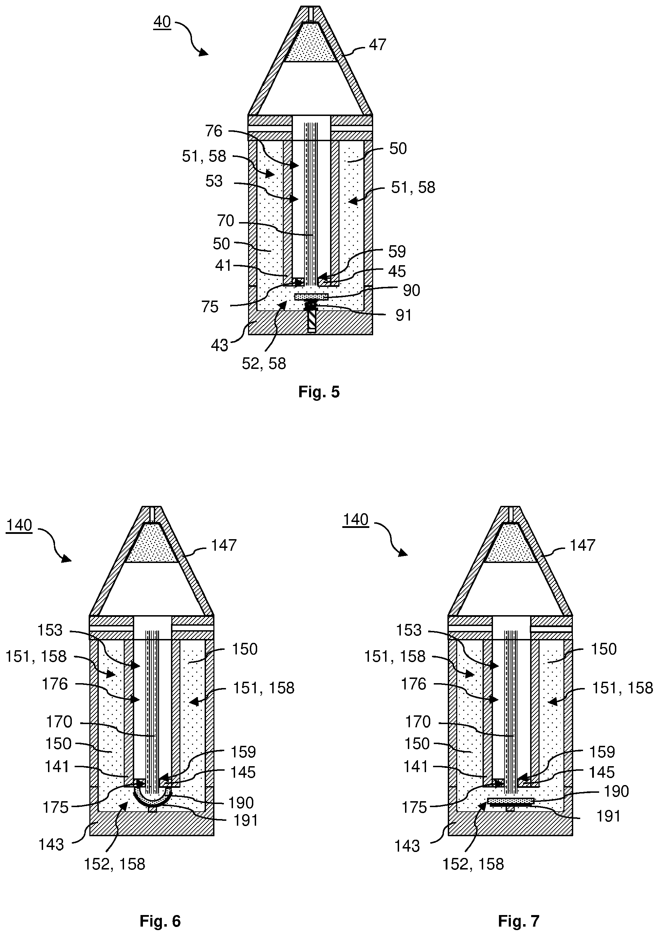

**Fig. 5** shows an alternative embodiment of the article 40 according to Fig .1 and Fig. 3. Here, the liquid conduit 70 is not attached to the sealing member 90. Instead, the liquid conduit 70 is fixedly arranged in the article 40, in particular only in the vaporization zone 53 and the reservoir outlet 59. That is, the liquid conduit 70 terminates in the passage of the reservoir outlet 59, but does not pass into the reservoir 58, neither in the closed configuration nor in the open configuration. However, in the open configuration, the part of the liquid conduit, which terminates in the reservoir outlet 59, faces the reservoir and thus may still be denoted as soaking section 75. In this configuration, the aperture of the bushing 45 forming the reservoir outlet 59 may also serve for bundling the filaments 71, 72 of the liquid conduit 70, that is, for keeping the filaments 71, 72 together. Furthermore, the aperture may serve to fix the position of the liquid conduit 70 relative to the article housing.

Again with reference to Fig. 1, the article 40 comprises a tapered shape mouthpiece 47 which is attached to the first end cap 44 and configured to be taken into a user's mouth for puffing. The mouthpiece 47 includes a filter 55 and an air outlet 48. The mouthpiece 47 is in fluid communication with the vaporization cavity 45 through an outlet 49 in the first end cap 44. The first end cap 44 comprises at least one air inlet 46 which enables air to enter the article 40. The air inlet 46 may be configured to provide airflow at or around the heating section 76 of the liquid conduit 70. The air inlet 46 may be a hole. Likewise, the air inlet 46 may be a nozzle that is configured to direct airflow to a specific target location at the liquid conduit 70. In addition, Hence, when a user takes a puff at the mouthpiece 47, air is drawn into the vaporization cavity 53 of the article 40. Aerosol-forming liquid that is vaporized from the heating section 76 of the liquid conduit 70 is exposed to the air passing through the vaporization cavity 45 such as to form an aerosol which may leave the vaporization cavity 45 through the outlet 49 into the mouthpiece where it which may then be drawn out through the filter 55 and the air outlet 48 into a users' mouth. The filter 55 may be used to filter out undesired components of the aerosol. The filter 55 may also comprise an add-on material, for example, a flavor material to be added to the aerosol.

**Fig. 4** schematically illustrates an aerosol-generating system 80 according to an exemplary embodiment of the present invention. The system 80 comprises an aerosol-generating article 40 as shown in Fig. 1-3 as well as an electrically operated aerosol-generating device 60 that is capable of interacting with the article 40 in order to generate an aerosol. For this, the aerosol-generating device 60 comprises a receiving cavity 62 formed within the device housing 61 at a proximal end of the device 60. The receiving cavity 62 is configured to removably receive at least a portion of the aerosol-generating article 40. In particular, the aerosol-generating device 60 is configured to inductively heat the heating section 76 of the liquid conduit 70 in order to vaporize aerosol-forming liquid 50 that is conveyed from the capillary buffer reservoir 52 via the soaking section 75 to the heating section 76 in the vaporization cavity 53. For this, the device 60 comprises an induction source including an induction coil 32. In the present embodiment, the induction coil 32 is a single helical coil which is arranged and configured to generate a substantially homogeneous alternating magnetic field within the receiving cavity 62. As can be seen in Fig. 4, the induction coil 32 is arranged around the proximal end portion of the receiving cavity 62 such as to only surround the heating section 76 of the liquid conduit 70, when the aerosol-generating article 40 is received in the receiving cavity 62. Accordingly, in use of the device 60, the induction coil 32 generates an alternating magnetic field that only penetrates the heating section 76 of the liquid conduit 70 in the vaporization cavity 53 of the article 40. In contrast, due to the local heating, the soaking section 75 of the liquid conduit 70 stays at temperatures below the vaporization temperature. Thus, boiling of aerosol-forming liquid 50 within the capillary buffer reservoir 52 and the main reservoir 51 is prevented. Hence, in use the liquid conduit 70 comprises a temperature profile along its length extension with sections of higher and lower temperatures. More specifically, the temperature profile shows a temperature increase from temperatures below a vaporization temperature T_vap of the aerosol-forming liquid 50 in the soaking section 75 to temperatures above the respective vaporization temperature in the heating section 76.

The actual temperature profile forming up in use of the susceptor assembly 10 depends on the thermal conductivity and the length of the liquid conduit 70. Accordingly, in order to have sufficient temperature gradient between the soaking sections 75 and the heating section 76, the liquid conduit 70 requires a certain total length. With regard to the present embodiment, the total length of the liquid conduit 70 may be in a range between 5 millimeter and 50 millimeter, in particular between 10 millimeter and 40 millimeter, preferably between 10 millimeter and 30 millimeter, more preferably between 10 millimeter and 20 millimeter.

In order to provide the thermal energy that is required for driving the phase transformation of the actuator member 91 and thus for transferring the sealing member 90 from the closed configuration into the open configuration, the aerosol-generating device comprises an inductive heating arrangement. The inductive heating arrangement comprise an induction source including an induction coil 94 for generating an alternating magnetic field at the place of the thermally driven actuator member 91, when the article 40 is received in the aerosol-generating device 60 in order to inductively heat the actuator member 91. Inductive heating of the actuator member 91 works as its shape-memory material is at electrically conductive and thus capable to convert electromagnetic energy into heat when subjected to an alternating magnetic field. In the present embodiment, the induction coil 94 is a flat spiral coil, in particular a pancake coil. Use of a flat spiral coil allows a compact design that is robust and inexpensive to manufacture. For driving the phase transformation of the shape-memory material, the actuator member 91 is heated up to or above the switching temperature of the shape-memory material. However, the heating temperature should be still well below the vaporization temperature T_vap of the aerosol-forming liquid 50. Heating of the actuator member 91 may be started in response to a user input or a start of the heating operation for heating the aerosol-forming liquid or the insertion of the article into the aerosol-generating device.

The aerosol-generating device 60 further comprises a controller 64 for controlling operation of the aerosol-generating system 80, in particular for controlling the heating operation of the liquid conduit 70 and the thermally driven actuator member 91. Furthermore, the aerosol-generating device 60 comprises a power supply 63 providing electrical power for generating the alternating magnetic field. Preferably, the power supply 63 is a battery such as a lithium iron phosphate battery. The power supply 63 may have a capacity that allows for the storage of enough energy for one or more user experiences. Both, the controller 64 and the power supply 63 arranged in a distal portion of the aerosol-generating device 60.

**Fig. 6** and **Fig. 7** schematically illustrate a second exemplary embodiment of an aerosol-generating 140 article according to the present invention. In general, the aerosol-generating article 140 according to Figs. 6 - 7 is very similar to the aerosol-generating article 40 shown in Figs. 1 - 3. Therefore, identical or similar features are denoted with the same reference signs, yet incremented by 100. In contrast to the first embodiment shown in Figs. 1 - 3, the article 140 according to Figs. 6 - 7 comprises a thermally driven actuator member 191 which is a star spring of a two-way shape-memory material. The actuator member 191 is attached to the second end cap 143. In a first phase at temperatures below the switching temperature of the shape-memory material, the star spring is in a bend configuration in which the arms of the star spring are bended out of plane, as shown in Fig. 6. In a second phase at temperatures at or above the switching temperature of the shape-memory material, the star spring is in flat configuration, as shown in Fig. 7. Like in the first embodiment, the article 140 comprises a sealing member 190 made of rubber. The disc-like sealing member 190 is fixedly attached to the star spring and laterally protrudes beyond the dimensions of the star spring. Due its flexible nature, the sealing member 190 may be deformed and thus follows the shape transformation of the star spring between the first phase and the second phase. Hence, at temperatures at or above the switching temperature, the sealing member 190 is in flat configuration in which it clears the reservoir outlet 159. In contrast, at temperatures below the switching temperature of the shape-memory material, the sealing member 190 is deformed into a cup-like shape such as to sealingly cover the reservoir outlet 159 and the soaking section 175 of the liquid conduit. Instead of a shape-memory material, the thermally driven actuator member 191 may be made of a bi-metal which is in a bend configuration at temperatures below the operating temperature of the article during use and in a flat configuration at temperatures close to or at the operating temperature of the article during use.

While Figs. 6 - 7 show an exemplary embodiment of a sealing member that is deformable between a closed configuration and an open configuration, Figs. 1 - 3 show an exemplary embodiment of a sealing member that is displaceable between a closed configuration and an open configuration. Both embodiments fall within the term of a sealing member that is "transferrable" between a closed configuration and an open configuration.

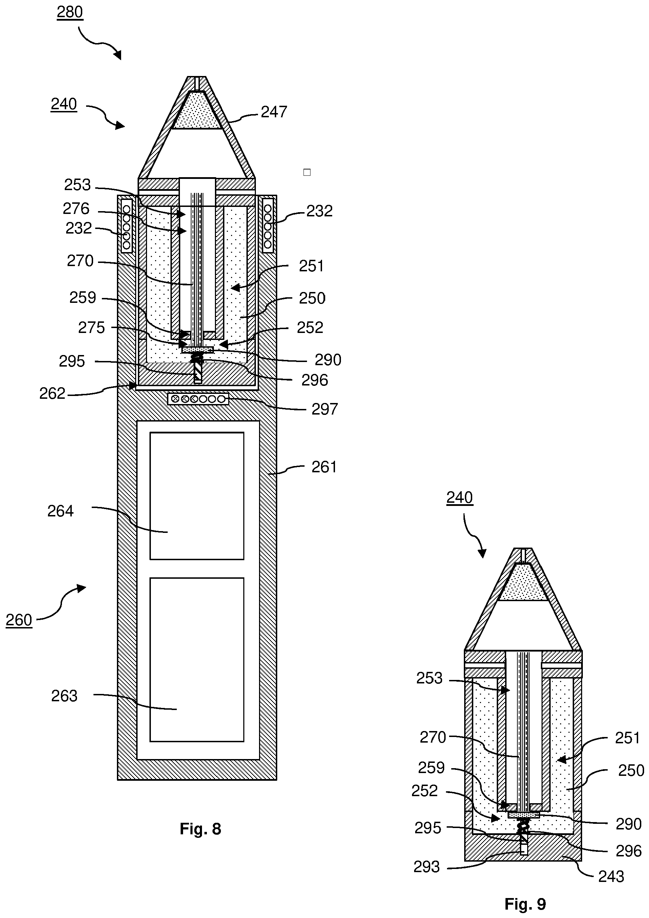

**Fig. 8** schematically illustrates a second exemplary embodiment of an aerosol-generating system 280 according to the present invention. The system 280 comprises an aerosol-generating article 240 and an aerosol-generating device 260 for use with the article 240, both of which are similar to the aerosol-generating article 80 and the aerosol-generating device 60 of the aerosol-generating system 80 shown in Fig. 4. Therefore, identical or similar features are denoted with the same reference signs, yet incremented by 200. In contrast to the system 80 shown in Fig. 4, the article 240 according to Fig. 8 comprises a magnetically driven actuator member 295. In the present embodiment, the magnetically driven actuator member comprise a piston 295 made of a ferromagnetic material which is movable at least from a first position into a second position by interaction with a magnetic coil 297 of the aerosol-generating device 260. Together, the magnetic coil 297 and the ferromagnetic piston 295 form a moving iron actuator. The magnetic coil 297 is arranged close to the bottom portion of the cavity 262 of the device 260 such that the ferromagnetic piston 295 may experience the magnetic field of the magnetic coil 297, when the article is received in the cavity 262. Hence, when the magnetic coil 297 is switched on, as shown in Fig. 8, the ferromagnetic piston 295 is attracted by the coil 297 and thus moves in a direction opposite the reservoir outlet 259. As the sealing member 290 is fixedly attached to the piston 295, the latter lifts off the sealing member 290 from the bushing 245 such as to free the reservoir outlet 259. When the magnetic coil 297 is switched off, the ferromagnetic piston 295 is not attracted anymore. In order to transfer the piston 295 back into the first position and thus the sealing member into the closing configuration, the article 240 further comprises a return mechanism. In the present embodiment, the return mechanism comprises a helical return spring 296 which is arranged around the piston and abuts against the inner surface of the second end cap 243 at one side and against the sealing member 290 at the other side. Hence, when the piston 295 is attracted by the magnetic coil 297 into the second position, the return spring 296 is loaded as being compressed. Vice versa, when the magnetic coil 297 is switched off, the return spring 296 may release its load which causes the piston 295 to move back into the first position and the sealing member 290 to be pressed against the bushing 245 such as to sealingly close the reservoir outlet 259. This situation is shown in **Fig. 9****.** In order to provide guidance, the piston 295 is slidingly supported in a guide hole 293 in the second end cap 243.

Alternatively, the piston may comprise a permanent magnet. Advantageously, usage of a permanent magnet enables to use the magnetic coil for transferring the sealing member from the closed configuration into the open configuration as well from the open configuration into the closed configuration by reversing the polarity of the magnetic coil. In this configuration, the article does not necessarily require a return mechanism, such as a return spring.

In any case, usage of a magnetic coil enables to open and close the reservoir outlet in a controlled manner. The aerosol-generating device may be configured such as to activate the magnetic coil in response to at least one of a user input or a start of the heating operation for heating the aerosol-forming liquid or the insertion of the article into the aerosol-generating device. Likewise, the aerosol-generating device may be configured such as to de-activate the magnetic coil in response to at least one of a user input or a stop of the heating operation for heating the aerosol-forming liquid or the removal of the article from the aerosol-generating device.

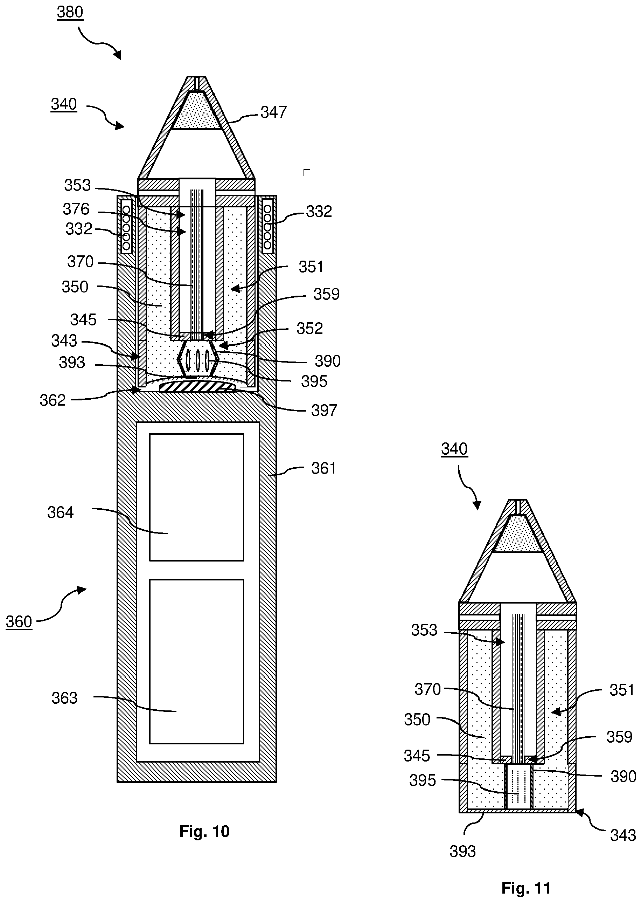

**Fig. 10** schematically illustrates a third exemplary embodiment of an aerosol-generating system 380 according to the present invention. The system 380 comprises an aerosol-generating article 340 and an aerosol-generating device 360 for use with the article 340, both of which are similar to the aerosol-generating article 80 and the aerosol-generating device 60 of the aerosol-generating system 80 shown in Fig. 4. Therefore, identical or similar features are denoted with the same reference signs, yet incremented by 300. In contrast to the system 80 shown in Fig. 4, the article 340 according to Fig. 10 comprises a mechanical-contact driven actuator member 393 configured and arranged to mechanically interact with the aerosol-generating device 360 when being inserted into the aerosol-generating device 360 such as to be transferred from a first configuration into a second configuration, thereby transferring the sealing member 390 from the closed configuration into the open configuration. In the present embodiment, the mechanical-contact driven actuator member 393 is a flexible wall member made of an elastic material, such as silicone, which forms the bottom portion of the second end cap 343. The sealing member 390 is a flexible tube made of elastic membrane material which comprises a plurality of slits 395 through the tube wall extending along the tube axis. The slitted tube-like sealing member 390 is attached at its one end at the flexible actuator member 393, and at its other end at the bushing 345. When the article 340 is inserted into the cavity 362 of the device 360, the flexible actuator member 393 gets in contact with a pusher, which in the present embodiment is a piston-like protrusion 397 at the bottom of the cavity 362. This causes the flexible actuator member 393 to be deformed towards the interior of the article 340. Due to this deformation of the actuator member 393, the slitted tube-like sealing member 390 is compressed such as to bulge outwardly. As a consequence, the slits 395 through the tube wall of the sealing member 390 open up, thereby allowing aerosol-forming liquid to enter the interior of the tube-like sealing member 390 and thus to get into fluid communication with the liquid conduit 370 in the reservoir outlet 359. When the article 340 is removed from the cavity 362, the flexible actuator member 393 returns back into its flat (non-deformed) configuration due to its elastic nature. Likewise, the tube-like sealing member 390 returns back into its extended (non-bulged) configuration, due to its elastic nature and due to the flexible actuator member 393 straightening it when the actuator member 393 returns back into its flat configuration. In the extended (non-bulged) configuration of the sealing member 390, as shown in **Fig. 11****,** the slits 395 through the tube wall of the sealing member 390 are sealingly closed such the tube-like sealing member 390 sealingly close the reservoir outlet 259. Hence, like the embodiment shown in Fig. 6 - 7, the sealing member 390 according to Fig. 10 - 11 is another example of a sealing member that is deformable between a closed configuration, as shown in Fig. 11, and an open configuration, as shown in Fig. 10.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A ± 5 % of A. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. An aerosol-generating article (140) for use with an aerosol-generating device, the article (140) comprising:
- a liquid reservoir for storing an aerosol-forming liquid (150), wherein the liquid reservoir comprises a reservoir outlet (159);
- a sealing member (190) reversibly transferrable between an open configuration and a closed configuration such as to open or sealingly close the reservoir outlet (159), respectively; and
- an actuator member (191) operatively coupled to the sealing member (190) for transferring the sealing member (190) at least from the closed configuration into the open configuration,
wherein the actuator member (191) is a thermally driven actuator member (191) comprising a bi-metal, and wherein the sealing member (190) is displaceable or deformable between the closed configuration and the open configuration.

2. An aerosol-generating article (40) for use with an aerosol-generating device (60), the article (40) comprising:
- a liquid reservoir for storing an aerosol-forming liquid (50), wherein the liquid reservoir comprises a reservoir outlet (59);
- a sealing member (90) reversibly transferrable between an open configuration and a closed configuration such as to open or sealingly close the reservoir outlet (59), respectively; and
- an actuator member (91) operatively coupled to the sealing member (90) for transferring the sealing member (90) at least from the closed configuration into the open configuration,
wherein the actuator member (91) is a thermally driven actuator member (91) comprising a shape-memory material, and wherein the sealing member (90) is deformable between a flat shape in the open configuration or in the closed configuration, respectively, and a curved shape in the closed configuration or in the open configuration, respectively, and wherein the thermally driven actuator member (91), when heated, bends such as to transfer the sealing member (90) from a closed configuration into an open configuration.

3. The aerosol-generating article (40, 140) according to claim 1 or 2, wherein the thermally driven actuator member (91, 191) comprises at least one temperature actuated spring.

4. The aerosol-generating article (40, 140) according to any one of claims 1 to 3, wherein the thermally driven actuator member (91, 191) is inductively heatable comprising a susceptor material.

5. An aerosol-generating article (240) for use with an aerosol-generating device (260), the article (240) comprising:
- a liquid reservoir for storing an aerosol-forming liquid (250), wherein the liquid reservoir comprises a reservoir outlet (259);
- a sealing member (290) reversibly transferrable between an open configuration and a closed configuration such as to open or sealingly close the reservoir outlet (259), respectively; and
- an actuator member (295) operatively coupled to the sealing member (290) for transferring the sealing member (290) at least from the closed configuration into the open configuration, wherein the actuator member (295) is a magnetically driven actuator member (295);
wherein the magnetically driven actuator member (295) comprises a permanent magnet being movable at least from a first position into a second position by interaction with a magnetic coil (297), a permanent magnet or a magnetic material of the aerosol-generating device (260), thereby transferring the sealing member (290) from the closed configuration into the open configuration.

6. An aerosol-generating article (240) for use with an aerosol-generating device (260), the article (240) comprising:
- a liquid reservoir for storing an aerosol-forming liquid (250), wherein the liquid reservoir comprises a reservoir outlet (259);
- a sealing member (290) reversibly transferrable between an open configuration and a closed configuration such as to open or sealingly close the reservoir outlet (259), respectively; and
- an actuator member (295) operatively coupled to the sealing member (290) for transferring the sealing member (290) at least from the closed configuration into the open configuration, wherein the actuator member (295) is a magnetically driven actuator member (295);
wherein the magnetically driven actuator member (295) comprises a ferromagnetic or ferrimagnetic member being movable at least from a first position into a second position by interaction with a magnetic coil (297) or a permanent magnet of the aerosol-generating device (260), thereby transferring the sealing member (290) from the closed configuration into the open configuration.

7. An aerosol-generating article (340) for use with an aerosol-generating device (360), the article (340) comprising
- a liquid reservoir for storing an aerosol-forming liquid (350), wherein the liquid reservoir comprises a reservoir outlet (359);
- a sealing member (390) reversibly transferrable between an open configuration and a closed configuration such as to open or sealingly close the reservoir outlet (359), respectively; and
- an actuator member (393) operatively coupled to the sealing member (390) for transferring the sealing member (390) at least from the closed configuration into the open configuration,
wherein the actuator member (393) is a mechanical-contact driven actuator member (393) configured and arranged to mechanically interact with the aerosol-generating device (360) when being inserted into the aerosol-generating device (360) such as to be transferred from a first configuration into a second configuration, thereby transferring the sealing member (390) from the closed configuration into the open configuration, wherein the mechanical-contact driven actuator member (393) is a flexible wall member of the aerosol-generating article (340).

8. The aerosol-generating article (40, 140, 240, 340) according to any one of the preceding claims, wherein then actuator member (91, 191, 295, 393) is configured for transferring the sealing member (90, 190, 290, 390) from the open configuration into the closed configuration.

9. The aerosol-generating article (40, 140, 240, 340) according to any one of the preceding claims, wherein the actuator member and the sealing member are integrally formed with each other.

10. The aerosol-generating article (340) according to any one of the preceding claims, wherein the sealing member (390) comprises a flexible tube made of an elastic membrane material.

11. The aerosol-generating article (340) according to claim 10, wherein the flexible tube comprises a plurality of slits (395) through the tube wall extending along a length axis of the flexible tube.

12. The aerosol-generating article (40, 140, 240, 340) according to any one of the preceding claims, further comprising a return mechanism arranged and configured to transfer the sealing member (90, 190, 290, 390) from the open configuration into the closed configuration.

13. The aerosol-generating article (40, 140, 240, 340) according to any one of the preceding claims, further comprising a liquid conduit (70, 170, 270, 370) for delivering aerosol-forming liquid (50, 150, 250, 350) from the liquid reservoir through the reservoir outlet (59, 159, 259, 359) into a region outside the liquid reservoir, when the sealing member (90, 190, 290, 390) is in the open configuration.

14. The aerosol-generating article (40, 240) according to claim 13, wherein the liquid conduit (70, 270) is attached to the sealing member (90, 290) such as to be transferrable between a first position and a second position together with the sealing member (90, 290).

15. The aerosol-generating article (40, 140, 240, 340) according to any one of claim 13 or claim 14, wherein the liquid conduit (70, 170, 270, 370) is an inductively heatable liquid conduit.

16. The aerosol-generating article (40) according to any one of claims 13 to 14, wherein the liquid conduit (70) is a wick element, in particular a filament bundle including a plurality of filaments (71, 72).

17. Aerosol-generating system (80, 280, 380) comprising an aerosol-generating device (60, 260, 360) and an aerosol-generating article (40, 140, 240, 340) according to any one of the preceding claims for use with the device (60, 260, 360).

18. Aerosol-generating system (280) comprising an aerosol-generating device (260) and aerosol-generating article (240) according to claim 5 for use with the device (260), wherein the aerosol-generating device (260) comprises a magnetic coil (297), a permanent magnet or a magnetic material for interaction with the permanent magnet of the magnetically driven actuator member (295) of the article (240).

19. Aerosol-generating system (280) comprising an aerosol-generating device (260) and aerosol-generating article (240) according to claim 6 for use with the device (260), wherein the aerosol-generating device (260) comprises a magnetic coil (297) or a permanent magnet for interaction with the ferromagnetic or ferrimagnetic member of the magnetically driven actuator member (295) of the article (240).

20. Aerosol-generating system (380) comprising an aerosol-generating device (360) and aerosol-generating article (340) according to claim 7 for use with the device (360), wherein the aerosol-generating device (360) comprises a pusher or a catch arranged and configured to transfer the actuator member (393) of the aerosol-generating article (340) from a first configuration into a second configuration when the article (340) is inserted into the aerosol-generating device (360), thereby transferring the sealing member (390) from the closed configuration into the open configuration.

21. The aerosol-generating system (380) according to claim 20, wherein the pusher or the catch is a movable pusher or a moveable catch.

22. The aerosol-generating system (380) according to claim 21, wherein movement of the movable pusher or the moveable catch is caused manually be a user actuating the movable pusher or the moveable catch, or by an electrically or a magnetically driven actuator.

23. The aerosol-generating system (380) according to claim 20, wherein the pusher or the catch is a stationary pusher or a stationary catch.

24. Aerosol-generating system (80, 180) comprising an aerosol-generating device (60) and an aerosol-generating article (40, 140) according to any one of claims 1 to 4, wherein the aerosol-generating device (60) comprises a heating arrangement for heating the thermally driven actuator member (91, 191), when the article (40, 140) is inserted into the aerosol-generating device (60), in order to transfer the sealing member (90, 190) from the closed configuration into the open configuration.

25. The aerosol-generating system (80, 180) according to claim 24, wherein the heating arrangement is a common heating arrangement used for actuating the thermally driven actuator member (91, 191) and for evaporating the aerosol-forming liquid (50, 150).

## Patentansprüche

1. Aerosolerzeugender Artikel (140) zum Gebrauch mit einer Aerosolerzeugungsvorrichtung, der Artikel (140) umfassend:
- einen Flüssigkeitsvorratsbehälter zum Lagern einer aerosolbildenden Flüssigkeit (150), wobei der Flüssigkeitsvorratsbehälter einen Vorratsbehälterauslass (159) umfasst;
- ein Dichtungselement (190), das reversibel zwischen einer offenen Konfiguration und einer geschlossenen Konfiguration überführbar ist, um den Vorratsbehälterauslass (159) zu öffnen bzw. dichtend zu verschließen; und
- ein Stellgliedelement (191), das mit dem Dichtungselement (190) wirkverbunden ist, um das Dichtungselement (190) wenigstens von der geschlossenen Konfiguration in die offene Konfiguration zu überführen,
wobei das Stellgliedelement (191) ein thermisch angetriebenes Stellgliedelement (191) ist, das ein Bimetall umfasst, und wobei das Dichtungselement (190) zwischen der geschlossenen Konfiguration und der offenen Konfiguration verschiebbar oder verformbar ist.

2. Aerosolerzeugender Artikel (40) zum Gebrauch mit einer Aerosolerzeugungsvorrichtung (60), der Artikel (40) umfassend:
- einen Flüssigkeitsvorratsbehälter zum Lagern einer aerosolbildenden Flüssigkeit (50), wobei der Flüssigkeitsvorratsbehälter einen Vorratsbehälterauslass (59) umfasst;
- ein Dichtungselement (90), das reversibel zwischen einer offenen Konfiguration und einer geschlossenen Konfiguration überführbar ist, um den Vorratsbehälterauslass (59) zu öffnen bzw. dichtend zu verschließen; und
- ein Stellgliedelement (91), das mit dem Dichtungselement (90) wirkverbunden ist, um das Dichtungselement (90) wenigstens von der geschlossenen Konfiguration in die offene Konfiguration zu überführen,
wobei das Stellgliedelement (91) ein thermisch angetriebenes Stellgliedelement (91) ist, das ein Formgedächtnismaterial umfasst, und wobei das Dichtungselement (90) zwischen einer flachen Form in der offenen Konfiguration bzw. in der geschlossenen Konfiguration und einer gekrümmten Form in der geschlossenen Konfiguration bzw. in der offenen Konfiguration verformbar ist, und wobei das thermisch angetriebene Stellgliedelement (91) sich bei Erwärmung derart biegt, dass das Dichtungselement (90) von einer geschlossenen Konfiguration in eine offene Konfiguration überführt wird.

3. Aerosolerzeugender Artikel (40, 140) nach Anspruch 1 oder 2, wobei das thermisch angetriebene Stellgliedelement (91, 191) wenigstens eine temperaturbetätigte Feder umfasst.

4. Aerosolerzeugender Artikel (40, 140) nach einem der Ansprüche 1 bis 3, wobei das thermisch angetriebene Stellgliedelement (91, 191) induktiv erwärmbar ist und ein Suszeptormaterial umfasst.

5. Aerosolerzeugender Artikel (240) zum Gebrauch mit einer Aerosolerzeugungsvorrichtung (260), der Artikel (240) umfassend:
- einen Flüssigkeitsvorratsbehälter zum Lagern einer aerosolbildenden Flüssigkeit (250), wobei der Flüssigkeitsvorratsbehälter einen Vorratsbehälterauslass (259) umfasst;
- ein Dichtungselement (290), das reversibel zwischen einer offenen Konfiguration und einer geschlossenen Konfiguration überführbar ist, um den Vorratsbehälterauslass (259) zu öffnen bzw. dichtend zu verschließen; und
- ein Stellgliedelement (295), das mit dem Dichtungselement (290) wirkverbunden ist, um das Dichtungselement (290) wenigstens von der geschlossenen Konfiguration in die offene Konfiguration zu überführen, wobei das Stellglied (295) ein magnetisch angetriebenes Stellglied (295) ist;
wobei das magnetisch angetriebene Stellgliedelement (295) einen Permanentmagneten umfasst, der durch Wechselwirkung mit einer Magnetspule (297), einem Permanentmagneten oder einem magnetischen Material der Aerosolerzeugungsvorrichtung (260) wenigstens von einer ersten Position in eine zweite Position bewegbar ist, wodurch das Dichtungselement (290) von der geschlossenen Konfiguration in die offene Konfiguration überführt wird.

6. Aerosolerzeugender Artikel (240) zum Gebrauch mit einer Aerosolerzeugungsvorrichtung (260), der Artikel (240) umfassend:
- einen Flüssigkeitsvorratsbehälter zum Lagern einer aerosolbildenden Flüssigkeit (250), wobei der Flüssigkeitsvorratsbehälter einen Vorratsbehälterauslass (259) umfasst;
- ein Dichtungselement (290), das reversibel zwischen einer offenen Konfiguration und einer geschlossenen Konfiguration überführbar ist, um den Vorratsbehälterauslass (259) zu öffnen bzw. dichtend zu verschließen; und
- ein Stellgliedelement (295), das mit dem Dichtungselement (290) wirkverbunden ist, um das Dichtungselement (290) wenigstens von der geschlossenen Konfiguration in die offene Konfiguration zu überführen, wobei das Stellglied (295) ein magnetisch angetriebenes Stellglied (295) ist;
wobei das magnetisch angetriebene Stellgliedelement (295) ein ferromagnetisches oder ferrimagnetisches Element umfasst, das durch Wechselwirkung mit einer Magnetspule (297) oder einem Permanentmagneten der Aerosolerzeugungsvorrichtung (260) wenigstens von einer ersten Position in eine zweite Position bewegbar ist, wodurch das Dichtungselement (290) von der geschlossenen Konfiguration in die offene Konfiguration überführt wird.

7. Aerosolerzeugender Artikel (340) zum Gebrauch mit einer Aerosolerzeugungsvorrichtung (360), der Artikel (340) umfassend
- einen Flüssigkeitsvorratsbehälter zum Lagern einer aerosolbildenden Flüssigkeit (350), wobei der Flüssigkeitsvorratsbehälter einen Vorratsbehälterauslass (359) umfasst;
- ein Dichtungselement (390), das reversibel zwischen einer offenen Konfiguration und einer geschlossenen Konfiguration überführbar ist, um den Vorratsbehälterauslass (359) zu öffnen bzw. dichtend zu verschließen; und
- ein Stellgliedelement (393), das mit dem Dichtungselement (390) wirkverbunden ist, um das Dichtungselement (390) wenigstens von der geschlossenen Konfiguration in die offene Konfiguration zu überführen,
wobei das Stellgliedelement (393) ein durch mechanischen Kontakt angetriebenes Stellgliedelement (393) ist, das ausgelegt und angeordnet ist, um bei dem Einsetzen in die Aerosolerzeugungsvorrichtung (360) mechanisch mit der Aerosolerzeugungsvorrichtung (360) zusammenzuwirken, um von einer ersten Konfiguration in eine zweite Konfiguration überführt zu werden, wodurch das Dichtungselement (390) von der geschlossenen Konfiguration in die offene Konfiguration überführt wird, wobei das durch mechanischen Kontakt angetriebene Stellgliedelement (393) ein flexibles Wandelement des aerosolerzeugenden Artikels (340) ist.

8. Aerosolerzeugender Artikel (40, 140, 240, 340) nach einem beliebigen der vorhergehenden Ansprüche, wobei das Stellgliedelement (91, 191, 295, 393) zum Überführen des Dichtungselements (90, 190, 290, 390) von der offenen Konfiguration in die geschlossene Konfiguration ausgelegt ist.

9. Aerosolerzeugender Artikel (40, 140, 240, 340) nach einem beliebigen der vorhergehenden Ansprüche, wobei das Stellgliedelement und das Dichtungselement einstückig miteinander ausgebildet sind.

10. Aerosolerzeugender Artikel (340) nach einem der beliebigen vorhergehenden Ansprüche, wobei das Dichtungselement (390) einen flexiblen Schlauch umfasst, der aus einem elastischen Membranmaterial hergestellt ist.

11. Aerosolerzeugender Artikel (340) nach Anspruch 10, wobei der flexible Schlauch eine Vielzahl von Schlitzen (395) durch die Schlauchwand umfasst, die sich entlang einer Längsachse des flexiblen Schlauchs erstrecken.

12. Aerosolerzeugender Artikel (40, 140, 240, 340) nach einem beliebigen der vorhergehenden Ansprüche, ferner umfassend einen Rückführmechanismus, der zum Überführen des Dichtungselements (90, 190, 290, 390) von der offenen Konfiguration in die geschlossene Konfiguration angeordnet und ausgelegt ist.

13. Aerosolerzeugender Artikel (40, 140, 240, 340) nach einem beliebigen der vorhergehenden Ansprüche, ferner umfassend eine Flüssigkeitsleitung (70, 170, 270, 370) zur Abgabe von aerosolbildender Flüssigkeit (50, 150, 250, 350) aus dem Flüssigkeitsvorratsbehälter durch den Vorratsbehälterauslass (59, 159, 259, 359) in eine Region außerhalb des Flüssigkeitsvorratsbehälters, wenn sich das Dichtungselement (90, 190, 290, 390) in der offenen Konfiguration befindet.

14. Aerosolerzeugender Artikel (40, 240) nach Anspruch 13, wobei die Flüssigkeitsleitung (70, 270) derart an dem Dichtungselement (90, 290) angebracht ist, dass sie zusammen mit dem Dichtungselement (90, 290) zwischen einer ersten Position und einer zweiten Position überführbar ist.

15. Aerosolerzeugender Artikel (40, 140, 240, 340) nach einem beliebigen von Anspruch 13 oder Anspruch 14, wobei die Flüssigkeitsleitung (70, 170, 270, 370) eine induktiv erwärmbare Flüssigkeitsleitung ist.

16. Aerosolerzeugender Artikel (40) nach einem beliebigen der Ansprüche 13 bis 14, wobei die Flüssigkeitsleitung (70) ein Dochtelement ist, insbesondere ein Filamentbündel mit einer Vielzahl von Filamenten (71, 72).

17. Aerosolerzeugungssystem (80, 280, 380), umfassend eine Aerosolerzeugungsvorrichtung (60, 260, 360) und einen aerosolerzeugenden Artikel (40, 140, 240, 340) nach einem beliebigen der vorhergehenden Ansprüche zum Gebrauch mit der Vorrichtung (60, 260, 360).

18. Aerosolerzeugungssystem (280), umfassend eine Aerosolerzeugungsvorrichtung (260) und einen aerosolerzeugenden Artikel (240) nach Anspruch 5 zum Gebrauch mit der Vorrichtung (260), wobei die Aerosolerzeugungsvorrichtung (260) eine Magnetspule (297), einen Permanentmagneten oder ein magnetisches Material zur Wechselwirkung mit dem Permanentmagneten des magnetisch angetriebenen Stellgliedelements (295) des Artikels (240) umfasst.

19. Aerosolerzeugungssystem (280), umfassend eine Aerosolerzeugungsvorrichtung (260) und einen aerosolerzeugenden Artikel (240) nach Anspruch 6 zum Gebrauch mit der Vorrichtung (260), wobei die Aerosolerzeugungsvorrichtung (260) eine Magnetspule (297) oder einen Permanentmagneten zur Wechselwirkung mit dem ferromagnetischen oder ferrimagnetischen Stellgliedelement des magnetisch angetriebenen Stellgliedes (295) des Artikels (240) umfasst.

20. Aerosolerzeugungssystem (380), umfassend eine Aerosolerzeugungsvorrichtung (360) und einen aerosolerzeugenden Artikel (340) nach Anspruch 7 zum Gebrauch mit der Vorrichtung (360), wobei die Aerosolerzeugungsvorrichtung (360) einen Schieber oder einen Riegel umfasst, der/die, wenn der Artikel (340) in die Aerosolerzeugungsvorrichtung (360) eingesetzt wird, zum Überführen des Stellgliedelements (393) des aerosolerzeugenden Artikels (340) von einer ersten Konfiguration in eine zweite Konfiguration angeordnet und ausgelegt ist, wodurch das Dichtungselement (390) von der geschlossenen Konfiguration in die offene Konfiguration überführt wird.

21. Aerosolerzeugungssystem (380) nach Anspruch 20, wobei der Schieber oder der Riegel ein beweglicher Schieber oder ein beweglicher Riegel ist.

22. Aerosolerzeugungssystem (380) nach Anspruch 21, wobei eine Bewegung des beweglichen Schiebers oder des beweglichen Riegels manuell durch einen Benutzer, der den beweglichen Schieber oder den beweglichen Riegel betätigt, oder durch ein elektrisch oder magnetisch angetriebenes Stellglied bewirkt wird.

23. Aerosolerzeugungssystem (380) nach Anspruch 20, wobei der Schieber oder der Riegel ein stationärer Schieber oder ein stationärer Riegel ist.

24. Aerosolerzeugungssystem (80, 180), umfassend eine Aerosolerzeugungsvorrichtung (60) und einen aerosolerzeugenden Artikel (40, 140) nach einem der Ansprüche 1 bis 4, wobei die Aerosolerzeugungsvorrichtung (60) eine Erwärmungsanordnung zum Erwärmen des thermisch angetriebenen Stellgliedelements (91, 191) umfasst, wenn der Artikel (40, 140) in die Aerosolerzeugungsvorrichtung (60) eingesetzt wird, um das Dichtungselement (90, 190) von der geschlossenen Konfiguration in die offene Konfiguration zu überführen.

25. Aerosolerzeugungssystem (80, 180) nach Anspruch 24, wobei die Erwärmungsanordnung eine gemeinsame Erwärmungsanordnung ist, die zum Betätigen des thermisch angetriebenen Stellgliedelements (91, 191) und zum Verdampfen der aerosolbildenden Flüssigkeit (50, 150) verwendet wird.

## Revendications

1. Article de génération d'aérosol (140) destiné à être utilisé avec un dispositif de génération d'aérosol, l'article (140) comprenant :
- un réservoir de liquide destiné à stocker un liquide formant aérosol (150), dans lequel le réservoir de liquide comprend une sortie de réservoir (159) ;
- un organe d'étanchéité (190) qui peut être transféré de manière réversible entre une configuration ouverte et une configuration fermée de manière à ouvrir ou fermer de manière étanche la sortie de réservoir (159), respectivement ; et
- un organe actionneur (191) couplé de manière fonctionnelle à l'organe d'étanchéité (190) pour transférer l'organe d'étanchéité (190) au moins de la configuration fermée à la configuration ouverte,
dans lequel l'organe actionneur (191) est un organe actionneur à entraînement thermique (191) comprenant un bimétal, et dans lequel l'organe d'étanchéité (190) peut être déplacé ou déformé entre la configuration fermée et la configuration ouverte.

2. Article de génération d'aérosol (40) destiné à être utilisé avec un dispositif de génération d'aérosol (60), l'article (40) comprenant :
- un réservoir de liquide destiné à stocker un liquide formant aérosol (50), dans lequel le réservoir de liquide comprend une sortie de réservoir (59) ;
- un organe d'étanchéité (90) qui peut être transféré de manière réversible entre une configuration ouverte et une configuration fermée de manière à ouvrir ou fermer de manière étanche la sortie de réservoir (59), respectivement ; et
- un organe actionneur (91) couplé de manière fonctionnelle à l'organe d'étanchéité (90) pour transférer l'organe d'étanchéité (90) au moins de la configuration fermée à la configuration ouverte,
dans lequel l'organe actionneur (91) est un organe actionneur à entraînement thermique (91) comprenant un matériau à mémoire de forme, et dans lequel l'organe d'étanchéité (90) peut être déformé entre une forme plate dans la configuration ouverte ou dans la configuration fermée, respectivement, et une forme incurvée dans la configuration fermée ou dans la configuration ouverte, respectivement, et dans lequel l'organe actionneur à entraînement thermique (91), lorsqu'il est chauffé, fléchit de manière à transférer l'organe d'étanchéité (90) d'une configuration fermée à une configuration ouverte.

3. Article de génération d'aérosol (40, 140) selon la revendication 1 ou 2, dans lequel l'organe actionneur à entraînement thermique (91, 191) comprend au moins un ressort actionné par la température.

4. Article de génération d'aérosol (40, 140) selon l'une quelconque des revendications 1 à 3, dans lequel l'organe actionneur à entraînement thermique (91, 191) peut être chauffé par induction comprenant un matériau suscepteur.

5. Article de génération d'aérosol (240) destiné à être utilisé avec un dispositif de génération d'aérosol (260), l'article (240) comprenant :
- un réservoir de liquide destiné à stocker un liquide formant aérosol (250), dans lequel le réservoir de liquide comprend une sortie de réservoir (259) ;
- un organe d'étanchéité (290) qui peut être transféré de manière réversible entre une configuration ouverte et une configuration fermée de manière à ouvrir ou fermer de manière étanche la sortie de réservoir (259), respectivement ; et
- un organe actionneur (295) couplé de manière fonctionnelle à l'organe d'étanchéité (290) pour transférer l'organe d'étanchéité (290) au moins de la configuration fermée à la configuration ouverte, dans lequel l'organe actionneur (295) est un organe actionneur à entraînement magnétique (295) ;
dans lequel l'organe actionneur à entraînement magnétique (295) comprend un aimant permanent qui peut être déplacé au moins d'une première position dans une deuxième position par interaction avec une bobine magnétique (297), un aimant permanent ou un matériau magnétique du dispositif de génération d'aérosol (260), transférant ainsi l'organe d'étanchéité (290) de la configuration fermée jusque dans la configuration ouverte.

6. Article de génération d'aérosol (240) destiné à être utilisé avec un dispositif de génération d'aérosol (260), l'article (240) comprenant :
- un réservoir de liquide destiné à stocker un liquide formant aérosol (250), dans lequel le réservoir de liquide comprend une sortie de réservoir (259) ;
- un organe d'étanchéité (290) qui peut être transféré de manière réversible entre une configuration ouverte et une configuration fermée de manière à ouvrir ou fermer de manière étanche la sortie de réservoir (259), respectivement ; et
- un organe actionneur (295) couplé de manière fonctionnelle à l'organe d'étanchéité (290) pour transférer l'organe d'étanchéité (290) au moins de la configuration fermée à la configuration ouverte, dans lequel l'organe actionneur (295) est un organe actionneur à entraînement magnétique (295) ;
dans lequel l'organe actionneur à entraînement magnétique (295) comprend un organe ferromagnétique ou ferrimagnétique qui est mobile au moins d'une première position à une deuxième position par interaction avec une bobine magnétique (297) ou un aimant permanent du dispositif de génération d'aérosol (260), transférant ainsi l'organe d'étanchéité (290) de la configuration fermée jusque dans la configuration ouverte.

7. Article de génération d'aérosol (340) destiné à être utilisé avec un dispositif de génération d'aérosol (360), l'article (340) comprenant
- un réservoir de liquide destiné à stocker un liquide formant aérosol (350), dans lequel le réservoir de liquide comprend une sortie de réservoir (359) ;
- un organe d'étanchéité (390) qui peut être transféré de manière réversible entre une configuration ouverte et une configuration fermée de manière à ouvrir ou fermer de manière étanche la sortie de réservoir (359), respectivement ; et
- un organe actionneur (393) couplé de manière fonctionnelle à l'organe d'étanchéité (390) pour transférer l'organe d'étanchéité (390) au moins de la configuration fermée à la configuration ouverte,
dans lequel l'organe actionneur (393) est un organe actionneur entraîné par contact mécanique (393) configuré et agencé pour interagir mécaniquement avec le dispositif de génération d'aérosol (360) lorsqu'il est inséré dans le dispositif de génération d'aérosol (360) de manière à être transféré d'une première configuration jusque dans une deuxième configuration, transférant ainsi l'organe d'étanchéité (390) de la configuration fermée à la configuration ouverte, dans lequel l'organe actionneur entraîné à contact mécanique (393) est un organe de paroi souple de l'article de génération d'aérosol (340).

8. Article de génération d'aérosol (40, 140, 240, 340) selon l'une quelconque des revendications précédentes, dans lequel ensuite l'organe actionneur (91, 191, 295, 393) est configuré pour transférer l'organe d'étanchéité (90, 190, 290, 390) de la configuration ouverte à la configuration fermée.

9. Article de génération d'aérosol (40, 140, 240, 340) selon l'une quelconque des revendications précédentes, dans lequel l'organe actionneur et l'organe d'étanchéité sont formés d'un seul tenant l'un avec l'autre.

10. Article de génération d'aérosol (340) selon l'une quelconque des revendications précédentes, dans lequel l'organe d'étanchéité (390) comprend un tube souple composé d'un matériau de membrane élastique.

11. Article de génération d'aérosol (340) selon la revendication 10, dans lequel le tube souple comprend une pluralité de fentes (395) à travers la paroi de tube s'étendant le long d'un axe longitudinal du tube souple.

12. Article de génération d'aérosol (40, 140, 240, 340) selon l'une quelconque des revendications précédentes, comprenant en outre un mécanisme de rappel agencé et configuré pour transférer l'organe d'étanchéité (90, 190, 290, 390) de la configuration ouverte à la configuration fermée.

13. Article de génération d'aérosol (40, 140, 240, 340) selon l'une quelconque des revendications précédentes, comprenant en outre un conduit de liquide (70, 170, 270, 370) pour distribuer un liquide formant aérosol (50, 150, 250, 350) depuis le réservoir de liquide à travers la sortie de réservoir (59, 159, 259, 359) jusque dans une région à l'extérieur du réservoir de liquide, lorsque l'organe d'étanchéité (90, 190, 290, 390) est dans la configuration ouverte.

14. Article de génération d'aérosol (40, 240) selon la revendication 13, dans lequel le conduit de liquide (70, 270) est fixé à l'organe d'étanchéité (90, 290) de manière à pouvoir être transféré entre une première position et une deuxième position conjointement avec l'organe d'étanchéité (90, 290).

15. Article de génération d'aérosol (40, 140, 240, 340) selon l'une quelconque de la revendication 13 ou de la revendication 14, dans lequel le conduit de liquide (70, 170, 270, 370) est un conduit de liquide pouvant être chauffé par induction.

16. Article de génération d'aérosol (40) selon l'une quelconque des revendications 13 et 14, dans lequel le conduit de liquide (70) est un élément de mèche, en particulier un faisceau de filaments comportant une pluralité de filaments (71, 72).

17. Système de génération d'aérosol (80, 280, 380) comprenant un dispositif de génération d'aérosol (60, 260, 360) et un article de génération d'aérosol (40, 140, 240, 340) selon l'une quelconque des revendications précédentes pour une utilisation avec le dispositif (60, 260, 360).

18. Système de génération d'aérosol (280) comprenant un dispositif de génération d'aérosol (260) et un article de génération d'aérosol (240) selon la revendication 5 pour une utilisation avec le dispositif (260), dans lequel le dispositif de génération d'aérosol (260) comprend une bobine magnétique (297), un aimant permanent ou un matériau magnétique pour une interaction avec l'aimant permanent de l'organe actionneur à entraînement magnétique (295) de l'article (240).

19. Système de génération d'aérosol (280) comprenant un dispositif de génération d'aérosol (260) et un article de génération d'aérosol (240) selon la revendication 6 pour une utilisation avec le dispositif (260), dans lequel le dispositif de génération d'aérosol (260) comprend une bobine magnétique (297) ou un aimant permanent pour une interaction avec l'organe ferromagnétique ou ferrimagnétique de l'organe actionneur à entraînement magnétique (295) de l'article (240).

20. Système de génération d'aérosol (380) comprenant un dispositif de génération d'aérosol (360) et un article de génération d'aérosol (340) selon la revendication 7 pour une utilisation avec le dispositif (360), dans lequel le dispositif de génération d'aérosol (360) comprend un poussoir ou un cliquet agencé et configuré pour transférer l'organe actionneur (393) de l'article de génération d'aérosol (340) d'une première configuration à une deuxième configuration lorsque l'article (340) est inséré dans le dispositif de génération d'aérosol (360), transférant ainsi l'organe d'étanchéité (390) de la configuration fermée à la configuration ouverte.

21. Système de génération d'aérosol (380) selon la revendication 20, dans lequel le poussoir ou le cliquet est un poussoir mobile ou un cliquet mobile.

22. Système de génération d'aérosol (380) selon la revendication 21, dans lequel le mouvement du poussoir mobile ou du cliquet mobile est provoqué manuellement par un utilisateur actionnant le poussoir mobile ou le cliquet mobile, ou par un actionneur à entraînement électrique ou magnétique.

23. Système de génération d'aérosol (380) selon la revendication 20, dans lequel le poussoir ou le cliquet est un poussoir fixe ou un cliquet fixe.

24. Système de génération d'aérosol (80, 180) comprenant un dispositif de génération d'aérosol (60) et un article de génération d'aérosol (40, 140) selon l'une quelconque des revendications 1 à 4, dans lequel le dispositif de génération d'aérosol (60) comprend un agencement de chauffage pour chauffer l'organe actionneur à entraînement thermique (91, 191), lorsque l'article (40, 140) est inséré dans le dispositif de génération d'aérosol (60), afin de transférer l'organe d'étanchéité (90, 190) de la configuration fermée dans la configuration fermée.

25. Système de génération d'aérosol (80, 180) selon la revendication 24, dans lequel l'agencement de chauffage est un agencement de chauffage commun utilisé pour actionner l'organe actionneur à entraînement thermique (91, 191) et pour évaporer le liquide formant aérosol (50, 150).
